(19) **Europäisches Patentamt / European Patent Office / Office européen des brevets**

(11) **EP 4 439 114 B1**

(12) **EUROPEAN PATENT SPECIFICATION**

(45) Date of publication and mention
of the grant of the patent:
**04.02.2026 Bulletin 2026/06**

(21) Application number: **23217697.4**

(22) Date of filing: **18.12.2023**

(51) International Patent Classification (IPC):
**G01S 7/41** (2006.01)          **G01S 13/04** (2006.01)
**G01S 13/86** (2006.01)          **G01S 13/88** (2006.01)
**G01S 13/90** (2006.01)          **G01S 7/292** (2006.01)

(52) Cooperative Patent Classification (CPC):
**G01S 13/887; G01S 7/2923; G01S 7/412;
G01S 7/417; G01S 13/04; G01S 13/867;
G01S 13/9064**

(54) **METHOD AND SYSTEM TO DETECT OBJECTS IN SEALED PACKAGES BASED ON VIRTUAL ANTENNA-BASED DELAY-MULTIPLY-AND-SUM (VA-DMAS)**

VERFAHREN UND SYSTEM ZUR ERKENNUNG VON OBJEKTEN IN VERSIEGELTEN PAKETEN AUF BASIS VON VERZÖGERUNGSMULTIPLIZIERUNG UND -SUMMEN (VA-DMAS) AUF BASIS VIRTUELLER ANTENNEN

PROCÉDÉ ET SYSTÈME POUR DÉTECTER DES OBJETS DANS DES BOÎTIERS SCELLÉS SUR LA BASE D'UN RETARD MULTIPLIER ET SOMME (VA-DMA) BASÉ SUR UNE ANTENNE VIRTUELLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.03.2023 IN 202321024037**

(43) Date of publication of application:
**02.10.2024 Bulletin 2024/40**

(73) Proprietor: **Tata Consultancy Services Limited
Maharashtra (IN)**

(72) Inventors:
• **CHAKRAVARTY, SOUMYA**
**700160 Kolkata - West Bengal (IN)**
• **CHOWDHURY, ARIJIT**
**700160 Kolkata - West Bengal (IN)**
• **RAY, ARINDAM**
**700160 Kolkata - West Bengal (IN)**
• **CHAKRAVARTY, TAPAS**
**700160 Kolkata - West Bengal (IN)**
• **KUMAR, ACHANNA ANIL**
**560066 Bengalore, Karnataka (IN)**
• **BHAUMIK, CHIRABRATA**
**700160 Kolkata -, West Bengal (IN)**
• **PAL, ARPAN**
**700160 Kolkata - West Bengal (IN)**

(74) Representative: **Goddar, Heinz J.
Boehmert & Boehmert
Anwaltspartnerschaft mbB
Pettenkoferstrasse 22
80336 München (DE)**

(56) References cited:
**GB-A- 2 541 658**

• **RANI SMRITI ET AL: "A Novel Inverse SAR Microwave Imaging Technique using Ultra Wideband Pulsed Radar", 29 August 2022 (2022-08-29), pages 1891 - 1895, XP093145029, ISBN: 978-90-82-79709-1, Retrieved from the Internet <URL:https://ieeexplore.ieee.org/stampPDF/getPDF.jsp?tp=&arnumber=9909615&ref=aHR0cHM6Ly9pZWVleHBsb3JlLmllZWWUub3JnL2RvY3VtZW50Lzk5MDk2MTU=> [retrieved on 20240325], DOI: 10.23919/EUSIPCO55093.2022.9909615**
• **NIALL O' MAHONY ET AL: "Deep Learning vs. Traditional Computer Vision", ARXIV.ORG, CORNELL UNIVERSITY LIBRARY, 201 OLIN LIBRARY CORNELL UNIVERSITY ITHACA, NY 14853, 30 October 2019 (2019-10-30), XP081523071, DOI: 10.1007/978-3-030-17795-9**

- ALAM NOWSHIN ET AL: "UWB Microwave Imaging for Non-Invasive Anomaly Detection in Human Lung and Possible Application in COVID-19 Diagnosis: A Review", 2021 2ND INTERNATIONAL CONFERENCE ON ROBOTICS, ELECTRICAL AND SIGNAL PROCESSING TECHNIQUES (ICREST), IEEE, 5 January 2021 (2021-01-05), pages 772 - 776, XP033900199, ISBN: 978-1-6654-1574-3, [retrieved on 20210120], DOI: 10.1109/ ICREST51555.2021.9331250

- KLEMM M ET AL: "Improved Delay-and-Sum Beamforming Algorithm for Breast Cancer Detection", INTERNATIONAL JOURNAL OF ANTENNAS AND PROPAGATION,, vol. 2008, 1 January 2008 (2008-01-01), pages 761402/9pp, XP007907166, [retrieved on 20090210], DOI: 10.1155/2008/761402

**Description**

TECHNICAL FIELD

The disclosure herein generally relates to the field of object detection systems, and, more particularly, to method and system to detect objects in sealed packages based on virtual antenna-based delay-multiply-and-sum (VA-DMAS).

BACKGROUND

The popular applications of microwave imaging (MI), such as synthetic aperture radar (SAR), ground penetrating radar (GPR) and medical imaging (CT scan) are well-known and widely employed. In recent years, researchers have been focusing on the capabilities of radar-based microwave imaging in detection of concealed weapons, through-the-wall imaging, etc. One important application is the screening of sealed packages in typical supply-chain scenarios, where the objects in sealed packages are moved in large quantities over conveyor belts at all times of the day. Many such sealed packages must be inspected daily for the presence of contraband objects, without opening them. In this situation, a microwave imaging (MI) system is envisaged to be more affordable as compared to X-ray machines. Therefore, imaging using ultra-wideband (UWB) radar, because of their high penetration, is an attractive proposition. However, it is known that the image of an object created using microwave radar is not comparable to X-ray image in terms of resolution and estimation of shape of the target object. Hence, implementation of artificial intelligence (AI) in microwave imaging is a superior option and an emerging application for object detection. To create a complete three-dimensional (3D) image of the moving object under test (OUT), it is required to be interrogated from multiple perspectives using a multi-antenna system. Also, antennas with high directionality are preferable, not only for improved image quality, but also to mitigate the problem of unwanted scattering from objects outside the observation window.

The MI systems usually require broadband highly directional antennas along with other associated RF components to measure the reflection data of the test media. Vivaldi antennas display high directivity, i.e., narrow beamwidth over a wide frequency band and thus, are an excellent choice for various microwave imaging applications. However, the incorporation of the radiation pattern of these directional antennas in the imaging algorithms (e.g., Delay-and-Sum) as a synthetic weight factor for improving the image resolution is heretofore unexplored in literature. From the perspective of radar imaging, the delay-and-sum (DAS) algorithm provides a digital beamformer that is widespread owing to its robustness, ease-of-use, and efficiency, making it very compatible with real-time high-speed imaging applications. This algorithm performs a weighted summation of signals, after time-shifting them with predefined delays, to increase the signal intensity in desired direction while suppressing unwanted return signals. The calculation of the weights causes a difference in performance between different DAS beamformers. RANI SMRITI ET AL: "A Novel Inverse SAR Microwave Imaging Technique using Ultra Wideband Pulsed Radar" provides a motion-induced radar imaging technique, where the object under study undergoes a circular translation motion on a rotating platform. A modified delay-and-sum (DAS) algorithm is built by incorporating virtual antenna array to estimate the shape of the object and its radial and angular displacement with respect to a fixed reference point. From the reconstructed images, it is seen that the radial displacement as well as the angular locations of the object have been successfully identified. NIALL O' MAHONY ET AL: "Deep Learning vs. Traditional Computer Vision" states that A radar imaging device that receives optical images of a target from varying positions, receives a sequence of radar measurements of the target taken by a radar sensor from varying positions, determines the trajectory Video data Radar data of the radar sensor relative to the target based on the optical images, and forms a synthetic aperture radar (SAR) image of the target based on the radar tracking Video Radar tracking measurements and the determined trajectory. These steps may be repeated to form additional SAR images that form a combined image. The additional images Structure from may be transformed to common pixel positions based on motion the corresponding radar trajectories. The radar sensor trajectory may be obtained from the optical sensor tracks trajectory and the position of the radar sensor relative to Form the optical sensor. The optical sensor trajectory may be apertures determined by tracking the movement of one or more sections of the object. The trajectory may also be based on radar measurements. A model of the shape of the Form object may be determined. The SAR image may be SAR images formed based on pixel positions from the model. À model 3D target representation may be superimposed onto the SAR Images model image.

SUMMARY

Embodiments of the present disclosure present technological improvements as solutions to one or more of the above-mentioned technical problems recognized by the inventors in conventional systems. For example, in one aspect, a processor implemented method of detecting objects in sealed packages based on virtual antenna-based delay-multiply-and-sum (VA-DMAS) according to independent claim 1 is provided.

In an embodiment, the one or more parameters corresponds to: (i) speed of the conveyor, (ii) length (L) of the conveyor available for imaging that is determined from a position and a beamwidth of the one or more antenna pairs, and (iii) number of scans (M). In the invention, the one or more range-time datasets corresponds to a form of a two-dimensional matrix, where the rows are the scans at each time instant, and the columns are the range bins. In the invention, the one or more object signature images is determined by a pattern factor derived based on a radiation pattern from the one or more antenna pairs. The pattern factor corresponds to a synthetic weight factor that heuristically incorporates directivity and gain of each antenna. In an embodiment, a confidence score for an unknown test object is obtained from the trained classification model to recognize if there is a false alarm raised when the object under test is classified.

In another aspect, there is provided a system, according to independent claim 4, for detection of objects in sealed packages based on virtual antenna-based delay-multiply-and-sum (VA-DMAS).

In an embodiment, the one or more parameters corresponds to: (i) speed of the conveyor, (ii) length (L) of the conveyor available for imaging that is determined from a position and a beamwidth of the one or more antenna pairs, and (iii) number of scans (M). In the invention, the one or more range-time datasets corresponds to a form of a two-dimensional matrix, where the rows are the scans at each time instant, and the columns are the range bins. In the invention, the one or more object signature images is determined by a pattern factor derived based on a radiation pattern from the one or more antenna pairs. In the invention, the pattern factor corresponds to a synthetic weight factor that heuristically incorporates directivity and gain of each antenna. In an embodiment, a confidence score for an unknown test object is obtained from the trained classification model to recognize if there is a false alarm raised when the object under test is classified.

In yet another aspect, there are provided one or more non-transitory machine readable information storage mediums according to independent claim 7.

In an embodiment, the one or more parameters corresponds to: (i) speed of the conveyor, (ii) length (L) of the conveyor available for imaging that is determined from a position and a beamwidth of the one or more antenna pairs, and (iii) number of scans (M). In the invention, the one or more range-time datasets corresponds to a form of a two-dimensional matrix, where the rows are the scans at each time instant, and the columns are the range bins. In the invention, the one or more object signature images is determined by a pattern factor derived based on a radiation pattern from the one or more antenna pairs. In the invention, the pattern factor corresponds to a synthetic weight factor that heuristically incorporates directivity and gain of each antenna. In an embodiment, a confidence score for an unknown test object is obtained from the trained classification model to recognize if there is a false alarm raised when the object under test is classified.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a system to detect objects in one or more sealed packages based on a virtual antenna-based delay-multiply-and-sum (VA-DMAS), according to an embodiment of the present disclosure.
FIG. 2 illustrates a schematic block diagram of the system of FIG.1, according to some embodiments of the present disclosure.
FIG. 3A and FIG. 3B are block diagrams illustrating one or more frames of reference and positions of a virtual antenna respectively, according to an embodiment of the present disclosure.
FIG. 4 is an exemplary graphical representation depicting an imaging using the virtual antenna with a directional pattern after incorporating a pattern factor, according to an embodiment of the present disclosure.
FIG. 5A is a top view of an exemplary broadband coplanar Vivaldi antenna, according to an embodiment of the present disclosure.
FIG. 5B is a bottom view showing a feedline of the exemplary broadband coplanar Vivaldi antenna, according to an embodiment of the present disclosure.
FIG. 5C is a three-dimensional (3D) view showing a substrate height, three dimensional (X, Y, Z) axes, and reference angles of the exemplary broadband coplanar Vivaldi antenna respectively, according to an embodiment of the present disclosure.
FIG. 6 is an exemplary graphical representation depicting a simulated return loss of the Vivaldi antenna, according to an embodiment of the present disclosure.
FIG. 7A is an exemplary graphical representation depicting a simulated radiation pattern of the Vivaldi antenna at 4 GHz and azimuth (X-Z plane) varying with $\phi$ respectively, according to an embodiment of the present disclosure.
FIG. 7B is an exemplary graphical representation depicting a simulated radiation pattern of the Vivaldi antenna at 4 GHz and Elevation (X-Y plane) varying with $\theta$ respectively, according to an embodiment of the present disclosure.
FIG. 8 is a graphical representation depicting a simulated realized gain against a frequency of the Vivaldi antenna, according to an embodiment of the present disclosure.

FIG. 9A and FIG. 9B are flow diagrams illustrating a method of detecting one or more objects in one or more sealed packages based on the virtual antenna-based delay-multiply-and-sum (VA-DMAS), according to an embodiment of the present disclosure.

FIG. 10A and FIG. 10B are exemplary graphical representations depicting a simulated and measured (a) return losses of two antennas, and (b) realized gain vs Frequency of the Vivaldi antenna respectively, according to an embodiment of the present disclosure.

FIG. 11A to FIG. 11F are exemplary graphical representations depicting one or more images obtained by the VA-DMAS from the viewpoints of Tx-Rx1 and Tx-Rx 2, without and with pattern factor, for a representative dataset of: (a) empty box, (b) box containing laptop battery, and (c) box containing a stack of Li-ion batteries respectively, according to an embodiment of the present disclosure.

FIG. 12A to FIG. 12C are exemplary graphical representations depicting one or more images obtained by the VA-DMAS from the combined view, with the pattern factor, for a representative dataset of: (a) empty box, (b) box containing laptop battery, and (c) box containing a stack of Li-ion batteries respectively, according to an embodiment of the present disclosure.

FIG. 13 is an exemplary graphical representation depicting precision and recall values for different classes using a Random Forest classifier, according to an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

There is a need for an effective approach to detect objects in sealed packages. Embodiments of the present disclosure provide a method and system to detect objects in the sealed packages based on machine learning-driven radar imaging. The embodiment of the present disclosure utilizes an ultra-wideband (UWB) pulsed radar along with an imaging technique to detect the presence of objects in the sealed packages. The imaging technique is alternatively referred to as a virtual antenna-based delay-multiply-and-sum (VA-DMAS) technique or an antenna pattern-weighted delay-multiply-and-sum (APW-DMAS) technique. A multi-antenna system is disclosed to interrogate object under test (OUT) in the sealed packages which moves on a conveyor belt, while the radar remains static. For example, to detect the presence of a collection of loosely packed Lithium-ion (Li-ion) batteries inside different-sized packages and distinguish them from other non-battery objects from one or more object signature images. The embodiment of the present disclosure utilizes a modified Delay-and-Sum (DAS) technique which is alternatively referred as the VA-DMAS, to generate machine interpretable image from the radar return data, where the virtual antenna positions are generated by exploiting the motion of the OUT. The one or more object signature images are determined by a pattern factor (PF) derived based on a radiation pattern from one or more antenna pairs i.e., one or more transmitter- receiver (Tx-Rx) antennas.

The pattern factor (PF) corresponds to a synthetic weight factor that heuristically incorporates directivity and gain of each antenna. The pattern factor is used to calculate weights of the VA-DMAS technique for amplification of intensities obtained from the desired object direction, covered by the main beam of the antennas, and to remove the reflections from outside the zone covered by the main beam of the antenna. In an example implementation, the system is designed with high gain, high directivity coplanar Vivaldi antennas, which help to increase the resolution of the formed one or more object signature images. The one or more object signature images are inputted to a feature extractor based on Two-Directional Two-Dimensional Principal Component Analysis (2D2D-PCA). The received back-scattered signal is converted into two-dimensional (2D) image using the VA-DMAS. The two-dimensional image represents shape, size, and object reflectivity vis-à-vis with an aspect angle. Subsequently, the features of interest are drawn from the one or more object signature images, and an appropriate machine learning-based classifier is implemented to obtain a final classification of the one or more object signature images which enables user to identify presence or absence of Lithium-ion (Li-ion) batteries without opening the sealed packages.

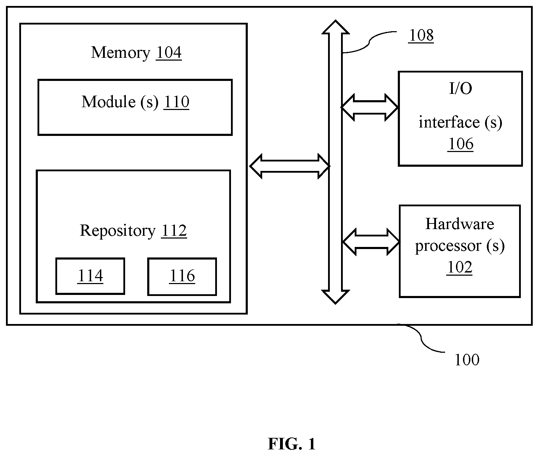

Referring now to the drawings, and more particularly to FIGS. 1 through 13, where similar reference characters denote corresponding features consistently throughout the figures, there are shown preferred embodiments, and these embodiments are described in the context of the following exemplary system and/or method.

FIG. 1 illustrates a system 100 to detect objects in the one or more sealed packages based on an improved virtual antenna-based delay-multiply-and-sum (VA-DMAS), according to an embodiment of the present disclosure. In an embodiment, the system 100 includes one or more processor(s) 102, communication interface device(s) or input/output (I/O) interface(s) 106, and one or more data storage devices or memory 104 operatively coupled to the one or more processors 102. The memory 104 includes a database. The one or more processor(s) processor 102, the memory 104, and the I/O interface(s) 106 may be coupled by a system bus such as a system bus 108 or a similar mechanism. The system 100 is further connected to a radar and antenna unit (not shown in figure) via the I/O interface(s) 106. The one or more processor(s) 102 that are hardware processors can be implemented as one or more microprocessors, microcomputers, microcontrollers, digital signal processors, central processing units, state machines, logic circuitries, and/or any devices that manipulate signals based on operational instructions. Among other capabilities, the one or more processor(s) 102 is configured to fetch and execute computer-readable instructions stored in the memory 104. In an embodiment, the system 100 can be implemented in a variety of computing systems, such as laptop computers, notebooks, hand-held devices, workstations, mainframe computers, servers, a network cloud, and the like.

The I/O interface device(s) 106 can include a variety of software and hardware interfaces, for example, a web interface, a graphical user interface, and the like. The I/O interface device(s) 106 may include a variety of software and hardware interfaces, for example, interfaces for peripheral device(s), such as a keyboard, a mouse, an external memory, a camera device, and a printer. Further, the I/O interface device(s) 106 may enable the system 100 to communicate with other devices, such as web servers and external databases. The I/O interface device(s) 106 can facilitate multiple communications within a wide variety of networks and protocol types, including wired networks, for example, local area network (LAN), cable, etc., and wireless networks, such as Wireless LAN (WLAN), cellular, or satellite. In an embodiment, the I/O interface device(s) 106 can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 110 and a repository 112 for storing data processed, received, and generated by the plurality of modules 110. The plurality of modules 110 may include routines, programs, objects, components, data structures, and so on, which perform particular tasks or implement particular abstract data types.

Further, the database stores information pertaining to inputs fed to the system 100 and/or outputs generated by the system (e.g., data/output generated at each stage of the data processing) 100, specific to the methodology described herein. More specifically, the database stores information being processed at each step of the proposed methodology.

Additionally, the plurality of modules 110 may include programs or coded instructions that supplement applications and functions of the system 100. The repository 112, amongst other things, includes a system database 114 and other data 116. The other data 116 may include data generated as a result of the execution of one or more modules in the plurality of modules 110. Further, the database stores information pertaining to inputs fed to the system 100 and/or outputs generated by the system (e.g., at each stage), specific to the methodology described herein. Herein, the memory for example the memory 104 and the computer program code configured to, with the hardware processor for example the processor 102, causes the system 100 to perform various functions described herein under.

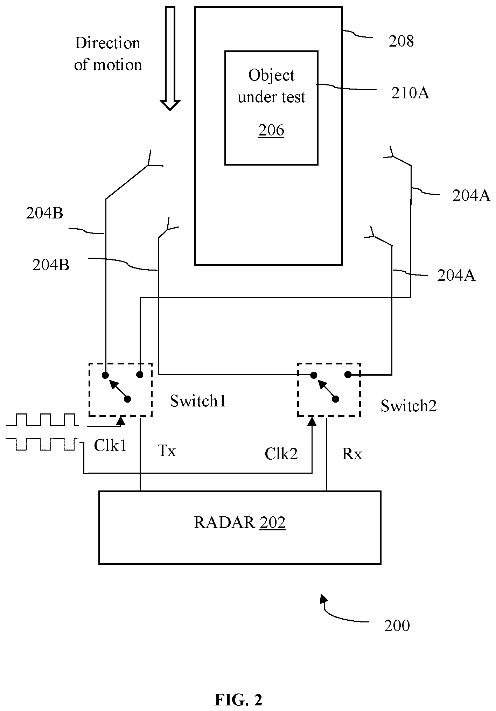

FIG. 2 illustrates a schematic block diagram of the system 100 of FIG.1, according to some embodiments of the present disclosure. The system 200 may be an example of the system 100 (FIG. 1). **In** an example embodiment, the system 200 may be embodied in, or is in direct communication with the system, for example the system 100 (FIG. 1). The system 200 is configured to detect objects in the one or more sealed packages based on an improved virtual antenna-based delay-multiply-and-sum (VA-DMAS). The system 200 includes a radar 202, one or more antenna pairs 204A-N, an object (206) under test (OUT), a conveyor 208, and the one or more sealed packages 210A-N. The system 200 is configured to receive one or more parameters associated with the conveyor 208. The one or more parameters correspond to: (i) speed of the conveyor 208, (ii) length (L) of the conveyor 208 available for imaging that is determined from a position and a beamwidth of the one or more antenna pairs 204AN, and (iii) number of scans (M). The system 200 is configured to obtain a scan time of a radar based on the one or more parameters.

$$Scan\ Time = \frac{L}{speed}$$

where a span of the observation window, i.e., the length of the conveyor belt available for imaging, is calculated from the position and beamwidths of the one or more antenna pairs 204A-N. The length is denoted as L. The scan time is divided into equal parts for each antenna pair (Tx-Rx) from one or more antenna pairs 204A-N. The time interval between each scan is determined based on the scan time of the radar 202.

$$Scan\ Interval = \frac{No.\ of\ scans}{Scan\ Time}$$

**In** an embodiment, the switching time between the antenna pairs is ignored. **In** an embodiment, time available for scanning by the radar 202 is determined by the speed of the conveyor 208. A sequence of scanning between the one or more antenna pairs 204A-N is determined based on corresponding position of the one or more antenna pairs 204A-N. A color threshold value of a predetermined position in a camera observation window is heuristically determined on the conveyor 208. If the color threshold value is exceeded as front end of the object 206 under test (OUT) packed inside the sealed package 210A crosses the predetermined position on the conveyor 208, and scanning is triggered. In an embodiment, the color threshold value corresponds to one or more RGB values. The sealed package 210A in the predetermined sequence is scanned by the radar 206 connected with the one or more antenna pairs 204A-N, to obtain one or more range-time datasets associated with one or more identifiers. The one or more range-time datasets correspond to one or more reflected signals from the object 206 under test having continuous motion on the conveyer. In an embodiment, the one or more range-time datasets may further correspond to a form of a two-dimensional matrix, where the rows are the scans at each time instant, and the columns are the range bins. The one or more range-time datasets are processed by the virtual antenna-pattern-weighted delay-multiply-and-sum (APW-DMAS) technique based on one or more positions of each virtual antenna to determine one or more object signature images. The one or more object signature images is determined by the pattern factor derived based on a radiation pattern from the one or more antenna pairs 204A-N. The pattern factor corresponds to a synthetic weight factor that heuristically incorporates directivity and gain of each antenna.

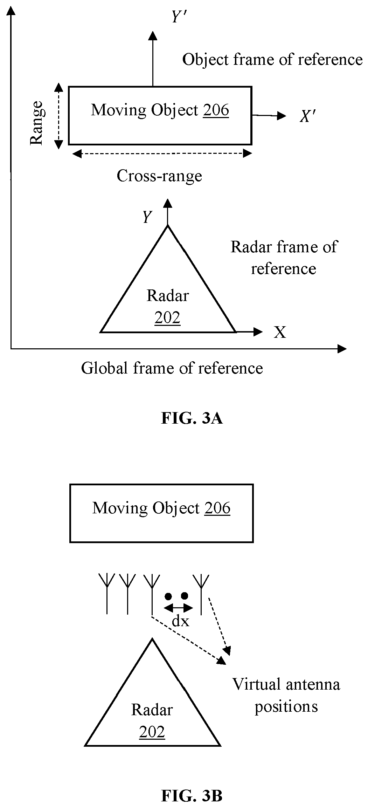

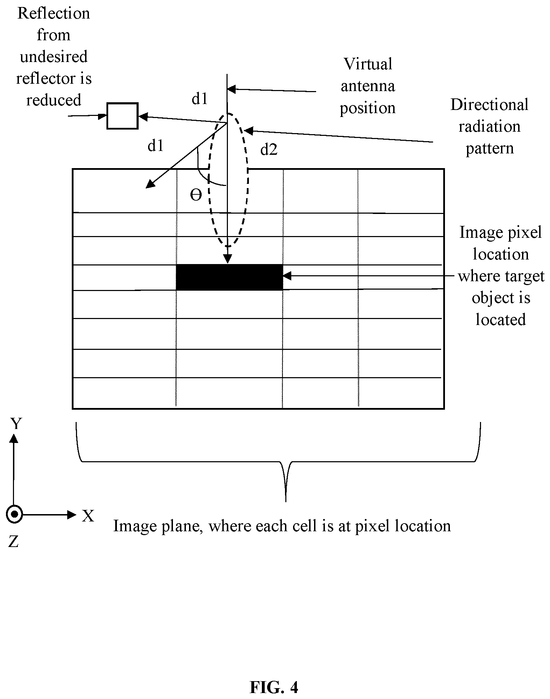

FIG. 3A and FIG. 3B are block diagrams illustrating one or more frames of reference and the one or more positions of the virtual antenna respectively, according to an embodiment of the present disclosure. FIG. 4 is an exemplary graphical representation depicting an imaging using the virtual antenna with a directional pattern after incorporating the pattern factor, according to an embodiment of the present disclosure. In an embodiment, the antenna is designed for a narrow beamwidth (i.e., a high directivity) and a high gain (relatively flat gain over an operating frequency) to provide an improved resolution of one or more object signature images on the incoming package due to the increased angular resolution obtained from the greater directivity. The effect of the directed beam is incorporated in the imaging technique by introducing the concept of a synthetic multiplier to the image pixel values. This multiplier is referred to as the pattern factor, which refines the obtained one or more object signature images by suppressing noise and removing unwanted artifacts. Considering, a distance and an angle of a pixel location from the antenna location, instead of just the distance. To eliminate an ambiguity due to strong reflection from an undesired reflector, a normalized radiation patterns of the designed antenna is incorporated, from the azimuth and elevation planes, into the imaging technique to form a synthetically focused one or more object signature images. If there is a strong reflection coming from an off-axis angle, a weight is reduced in proportion to a boresight so that the contribution of the reflection from the boresight is accentuated. Then, the pixel at distance d1 is now white, indicating little to no reflection intensities at that point. The reduction in weight follows the normalized values of the antenna radiation at each angle from boresight which is referred to as the pattern factor (PF).

In an exemplary embodiment, that the UWB Radar is scanning the OUT 206 in motion through two pairs of transmit-receive (Tx-Rx) antennas, observing the scene from two different perspectives, where the radar 202 scanning is done sequentially between the two pairs of the transmit-receive (Tx-Rx) antennas. Considering a configuration of the radar 202 and the one or more parameters, the virtual antenna-based delay-multiply-and-sum (VA-DMAS) technique is implemented on the data for obtaining a horizontal cross-section image of the object in a camera observation window. In an exemplary embodiment, considering two reference frames, Frame 1: the radar 202 frame of reference (i.e., the radar 202 as an origin), Frame 2: object frame of reference (i.e., center of the moving package as an origin). The object is moving in a straight line on the conveyor 208, and the radar 202 is stationary. The origin translation from the frame 1 to the frame 2 effectively indicates that the radar is moving in a virtual straight line in exact opposite direction as the actual movement of the one or more sealed package 210A-N, thereby the positions of the virtual antenna are created. In an embodiment, for small linear distances dx moved by the OUT 206, then the back-scattered signals from a same scatterer for different echoes are centered at the same range bin, where the dx is determined from the speed of belt of the conveyor 208, and the total number of scans.

The back-scattered signal from the OUT 206, obtained through each antenna pair in the form of a range-time matrix is pre-processed. For example, $M_1$, an envelope of the motion-filtered data obtained, is a $m \times n$ matrix (i.e., $m$ rows = total number of scans and $n$ columns= total number of range bins). Then the two matrices from each antenna pair are combined vertically in the direction of rows. The observation window size i.e., in a range is chosen e.g., from around 113 cm to 255 cm to eliminate both an early-time offset arising from a length of two RF cables and late-time reflections from one or more range bins outside the maximum distance covered by the imaging plane from the one or more antenna pairs 204A-N. Then the operating data matrix is $M_2$, of size $2m \times n$ where any cell outside the window is set to 0. The data matrix is used to generate one or more object signature images through the VA-DMAS technique. After origin translation to the object frame of reference, an image creation is performed in a transverse plane of a target. The transverse plane is divided into a $51 \times 51$ grid in the cross-range and range directions, where each grid point is called a pixel. From the object frame of reference, the two pairs of antennas are virtually moving in a straight line with distance between successive positions being dx, where dx is calculated as follows:

Considering, the total length of motion (L) of any of the antenna pairs,

$$dx = \frac{L}{m} \qquad\qquad (1)$$

Each scan of $M_2$ corresponds to one or more successive virtual antenna positions, giving $2m$ values of $dx$. For a $k^{th}$ scan ($k = 1, 2, ..., 2m$), projections of the first pair of transmit-receive (Tx-Rx 1) antenna positions on the transverse plane are denoted by the array of points $(X_1, Y_1, Z_1)$ when $k \leq m$, and that of Tx-Rx 2 by the array $(X_2, Y_2, Z_2)$ when $k > m$. Then, the combination of the two arrays to form the antenna position array $(X, Y, Z)$. Mathematically, for Tx-Rx 1,

$$\begin{cases} X_1(k) = k.\,dx \\ Y_1(k) = 0\ cm, \ k = 1, 2, ..., m \\ Z_1 = 9.5\ cm \end{cases} \tag{2}$$

Similarly for Tx-Rx 2,

$$\begin{cases} X_2(k) = L + k.\,dx - 12.5\ cm \\ \quad\ Y_2(k) = 46\ cm \\ \quad\quad Z_2 = 31\ cm \end{cases}, \ k = m + 1, m + 2, ..., 2m \tag{3}$$

Finally, for the combined data from the two antenna pairs, the array $(X, Y, Z)$ is obtained as:

$$\begin{cases} X = [X_1, \ X_2] \\ Y = [Y_1, \ Y_2] \\ Z = [Z_1, \ Z_2] \end{cases} \tag{4}$$

Each pixel point is denoted as $(x_i, y_j)$, $i, j = 1, 2, ..., 51$. The total intensity at each point is computed using the APW-DMAS technique to obtain the intensity matrix $I(x_i, y_j)$ at coordinates $(x_i, y_j)$. The round-trip distance of the pixel $(x_i, y_j)$ from the $k^{th}$ position is stored in the array $d_{i,j}$, where,

$$d_{i,j}(k) = 2\sqrt{(X(k) - x_i)^2 + (Y(k) - y_j)^2 + Z(k)^2}\,, \ i, j = 1, 2, ...\ 51, k =$$

$$1, 2, ...\ 2m \tag{5}$$

Each pixel makes a particular azimuth and elevation angle with each of the antenna positions. For incorporating the effect of the directive beams of the Vivaldi antennas into the image formation process, each of the antenna pairs are rotated at a particular angle with respect X, Y and Z axes, which is equivalent to an ordered series of rotations, one about each of the principal axes. These series of rotations are represented by a standard Euler rotation matrix [3], denoted by $R$, which uses the Euler angles of rotation - $\alpha$, $\beta$ and $\gamma$ - of the object in an anti-clockwise direction about the X, Y and Z axes respectively. Then for each pixel point, the effective distances on the X, Y and Z axes, from each virtual antenna position is given by:

$$\begin{cases} d_{x_i}(k) = R(x_i - X(k)) \\ d_{y_j}(k) = R(y_j - Y(k)) \\ \quad d_z(k) = R(Z(k)) \end{cases}, i, j = 1, 2, ...\ 51, k = 1, 2, ...\ 2m \tag{6}$$

For $k <= m$, an Euler angles is utilized for Tx-Rx 1 and for $k > m$, the Euler angles for Tx-Rx 2 are used in calculating the matrix $R$. The 2m number of distances is converted for each pixel into the spherical coordinate system ($r$, $\phi(k)$, $\theta(k)$). Then, $\phi(k)$ and $\theta(k)$ angle values are correlated to the respective azimuth and elevation radiation patterns at 4 GHz. The normalized radiation pattern magnitudes are considered on a linear scale. The normalized patterns are further filtered by a 361-point ($-180°$ to $+180°$) hamming window centered around the peak gain position to suppress the side lobes. For each of the azimuth and elevation angles, the corresponding realized gain values are taken from their respective normalized and filtered patterns in linear scale. Then the product of these two normalized values, and the product provides the pattern factor ($PF$). For each pixel point, $PF_{i,j}$ forms a $1 \times 2m$ array, with the multiplier value $PF_{i,j}(k)$ for the $k^{th}$ position.

Using the 2m virtual antenna position, a contribution of all scans is obtained towards a given pixel through linear interpolation with a time-of-flight calculation for a given pixel location $(x_i, y_j)$ from virtual antenna positions $(X, Y, Z)$. The pixel contribution from the $k^{th}$ virtual antenna position for each pixel is termed as $pc_{i,j}(k)$, thus forming the array $pc_{i,j}$ of length 2m that stores all the contributions to the intensity value of that pixel form all scans. The total intensity at the pixel $(x_i, y_j)$ is a

sum of the weighted pairwise products of pixel contribution from all the *k* scans, where $\text{PF}_{i,j}$ functions as the individual weights. This leads to synthetic focusing of the pixels of the one or more object signature images which are directly covered by the main beam. The total intensity is given by Eqn. (7).

$$I\left(x_i, y_j\right) = \frac{1}{2}\sum_{k,k'=1}^{2m} pc_{i,j}(k).\,\text{PF}_{i,j}(k).\,pc_{i,j}(k').\,PF_{i,j}(k'),\, k \neq k' \quad (7)$$

Equations 1 to 7 are calculated for all the other pixels to obtain the one or more object signature images. In an embodiment, one or more features associated with the one or more object signature images are extracted. A trained classification model is obtained based on one or more features associated with the one or more object signature images. The trained classification model identifies the class of each object under test from among one or more object under test moving on the conveyor 208. A confidence score for an unknown test object is obtained from the trained classification model to recognize if there is a false alarm raised when the object under test is classified. In an embodiment, the confidence score is provided by a voting process, in-built into the classifier (e.g., random forest) used. The calculation of this confidence score changes according to the machine-learning classifier used.

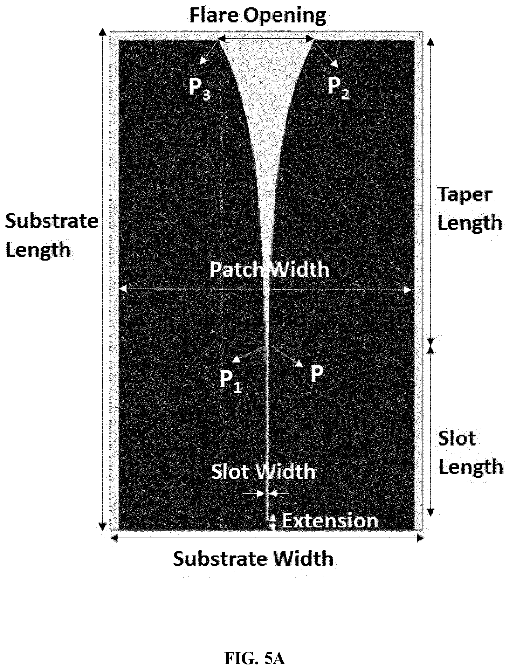

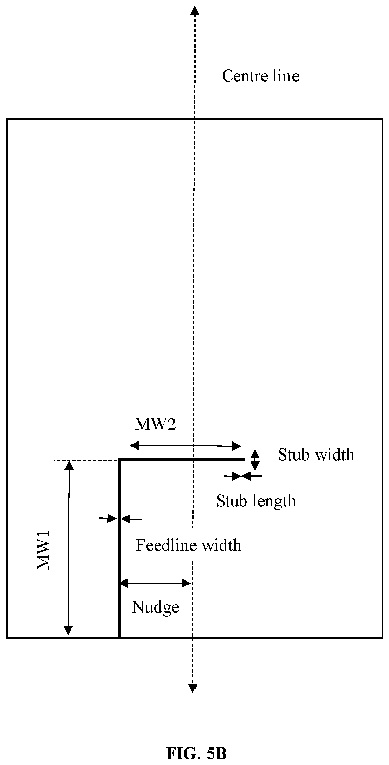

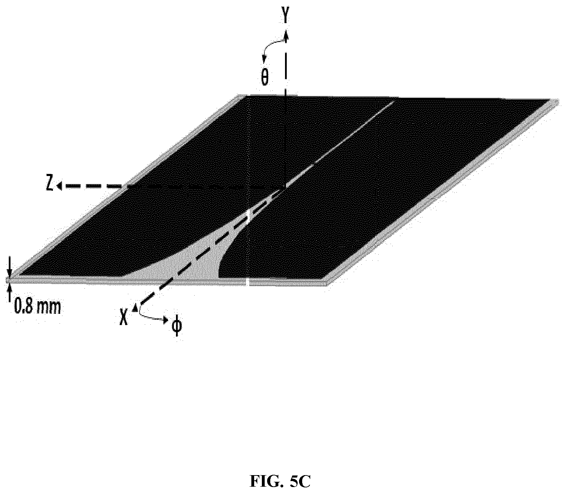

FIG. 5A is a top view of the exemplary broadband coplanar Vivaldi antenna, according to an embodiment of the present disclosure. FIG. 5B is a bottom view showing a feedline of the exemplary broadband coplanar Vivaldi antenna, according to an embodiment of the present disclosure. FIG. 5C is a three-dimensional (3D) view showing a substrate height, three dimensional (X, Y, Z) axes, and reference angles (i.e., $\theta$ and $\phi$) of the exemplary broadband coplanar Vivaldi antenna respectively, according to an embodiment of the present disclosure. The antennas designed for the system 200 are broadband coplanar Vivaldi antennas, which includes a radiating copper patch in which a slot-line with flared aperture is cut, on top of FR4 ($\varepsilon_r = 4.4$) substrate of thickness 0.8 mm. The size of the substrate is 140 mm × 90 mm, designed for the 3 GHz - 4.7 GHz frequency band, centered at 4 GHz. The antenna is fed by an L-shaped microstrip feedline, present on bottom surface of the surface, which ends in a rectangular stub whose length and width are optimized for broadband impedance matching. The antenna is fed through an SMA connector soldered to the other end of the feedline. The antenna design, with the design parameters. The optimized values of the parameters the Vivaldi antennas are provided in below table 1:

**TABLE 1**

| Design Parameters | Value (mm) |
| --- | --- |
| Substrate Length | 140 |
| Substrate Width | 90 |
| Substrate Thickness | 0.8 |
| Patch Width | 85 |
| Flare Opening | 27.75 |
| Flare Opening Rate (R) | 38 |
| Slot Length | 45 |
| Slot Width | 0.9 |
| Taper Length | 90 |
| MW1 | 48.05 |
| MW2 | 31.15 |
| Stub Length | 1.5 |
| Stub Width | 3 |
| Feedline Width | 1.1 |
| Nudge | 18.6 |
| Extension | 2.5 |

The slot-line to free space transition is governed by a flare opening of the slot-line. An exponential taper profile is defined by an opening rate (R) and the flare starting coordinates P and P' and the flare end-point coordinates P1 and P2 (P, P', P1 and P2.

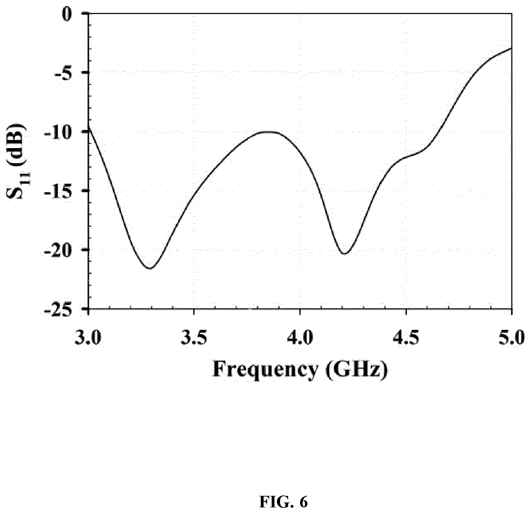

FIG. 6 is an exemplary graphical representation depicting a simulated return loss of the Vivaldi antenna, according to an embodiment of the present disclosure. The simulated return loss characteristics of the Vivaldi antenna, a $|S_{11}|$ value remains below -10 dB from 3 GHz to 4.7 GHz (e.g., impedance bandwidth = 1.7 GHz), with two resonance points at 3.3 GHz and 4.2 GHz.

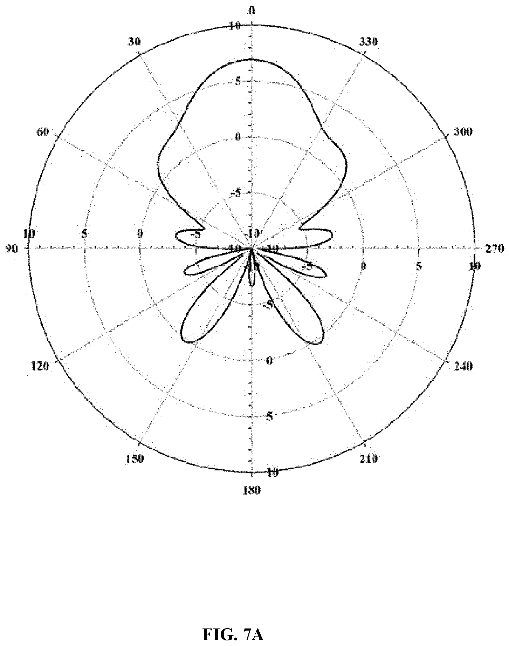

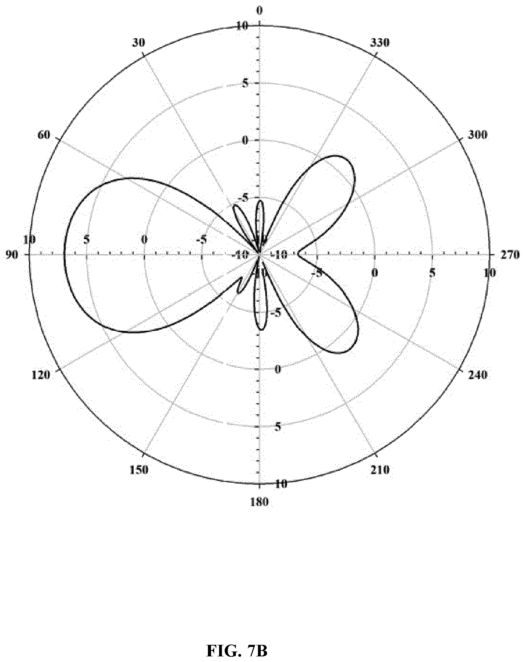

FIG. 7A is an exemplary graphical representation depicting a simulated radiation pattern of the Vivaldi antenna at 4 GHz and azimuth (X-Z plane) varying with $\phi$ respectively, according to an embodiment of the present disclosure. FIG. 7B is an exemplary graphical representation depicting a simulated radiation pattern of the Vivaldi antenna at 4 GHz and Elevation (X-Y plane) varying with $\theta$ respectively, according to an embodiment of the present disclosure. The Vivaldi antenna radiates towards the flare opening, i.e., the main beam is in the direction of $\phi = 0^0$, $\theta = 90^0$ in the X-Z plane. The simulated azimuth (X-Z plane) and the elevation (X-Y plane) radiation patterns at 4 GHz are shown. The respective 3 dB-beamwidths are $46.85^0$ and $56.5^0$, with a peak gain of 6.93 dBi at 4 GHz.

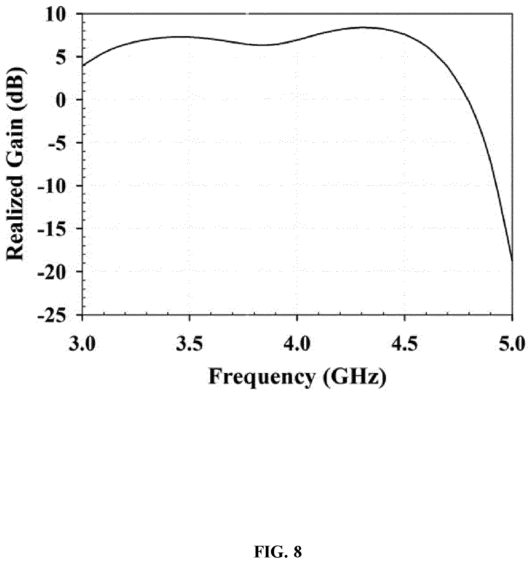

FIG. 8 is an exemplary graphical representation depicting a simulated realized gain against a frequency of the Vivaldi antenna, according to an embodiment of the present disclosure. The variation of the simulated peak realized gain in the azimuth plane with frequency is shown. The gain curve remains relatively flat from 3.1 GHz to 4.7 GHz, with the maximum gain at 8.4 dBi at 4.3 GHz. The -3 dB-gain bandwidth is from 3.09 GHz to 4.63 GHz. The design parameters of the antenna have been optimized such that $|S_{11}|$ remains below -10 dB over a wide operating range, and the realized gain (dB) remains relatively flat with high values over the operating range.

**Experimental results:**

For example, a study is conducted to detect objects in the sealed packages based on the virtual antenna-based delay-multiply-and-sum (VA-DMAS). The experiment was conducted using a PulsON 440 (P440) module, a UWB radio transceiver operating in the 3.1 GHz to 4.8 GHz frequency band in monostatic mode. The radar unit requires separate transmitter and receiver antennas. A highly-directive coplanar Vivaldi antenna is designed to cover the radar's operating frequency band and utilize two as transmitters and two as receivers. The configuration parameters of the radar module are controlled by corresponding graphical user interface (GUI). Range resolution for the module is 0.0091 m. The one or more configuration parameters of the radar are listed in Table 2.

**TABLE 2**

| Maximum Range under consideration (m) | Pulse Integration Index (PII) | Transmit power delivered (dBm) | Scan Interval (msec) |
|---|---|---|---|
| $0.88 \times 3 = 2.64$ | 15 | -31.6 | 84 |

The experimental setup includes a P440 radar module, connected through two RF switches and four 2 ft.-long RF cables to the four coplanar Vivaldi, an Arduino UNO board, and one 1.87 m-long conveyor. The Arduino board is used to control the RF switches. The OUT, i.e., the unopened package and corresponding contents, which are the target of in-box imaging, are moving on the conveyor belt towards the zone between the antenna pairs. The moving speed of the conveyor belt is set to around 11 cm/sec. The radar module is kept at a suitable height to facilitate the arrangement of the two sets of antennas (Tx-Rx 1 and Tx-Rx 2) on both the sides of the conveyor belt. The packages under investigation move on the belt towards the zone on the belt that is within line-of-sight and covered by the beam span of the two antenna pairs. The two sets of antennas are connected to the radar module through two 2:1 RF switches. The specifications of the RF Switches are given in Table 3.

**TABLE 3**

| Type | Operating Frequency Range | Insertion Loss @ 4 GHz (dB) | Isolation @ 4 GHz (dB) | Return Loss "ON" State (dB) | Return Loss "OFF" State (dB) |
|---|---|---|---|---|---|
| NonReflective | DC - 6 GHz | 1.4 | 44 | 9 | 18 |

The X, Y and Z axes, along with the origin point (i.e., at the base of the Tx-Rx 1 pair of antennas) are marked. According to the coordinate system, Tx-Rx 1 is at (0, 0, 9.5 cm) position, while Tx-Rx 2 is at (-12.5 cm, 46 cm, 31 cm). The distances are measured from the phase center of the transmitter-receiver pair. The two antenna pairs look at the top of the conveyor belt at an angle with the Y-axis, that ensures greater coverage of the belt surface with the conical beamwidth of the antennas, thus giving a wider view of the incoming package. The reason for such an arrangement is that only one pair of antennas is not sufficient to obtain a full $360^0$ view of the moving package since they can only detect a certain sectoral view of the package. Hence, the two pairs of antennas on two sides of the conveyor belt are considered to obtain the full view, and Tx-Rx 2 is also kept looking down from a height of 31 cm to obtain a consolidated three-dimensional view of the package. Then the Euler angles of anti-clockwise rotation of the antennas about the X, Y and Z axes respectively, for Tx-Rx 1, are $\alpha_1 = 0$, $\beta_1 = 0$, $\gamma_1 = -22.57°$ and for Tx-Rx 2, $\alpha_2 = 0$, $\beta_2 = -33.61^0$, $\gamma_2 = 31.72°$ (i.e., considering the negative of the actual rotation angle of the antenna to calculate effective rotation from the perspective of the imaging plane). The exact coordinates of the two antenna pairs have been decided on an empirical basis after many experiments on optimizing the view angles of the antennas. For applying the VA-DMAS technique, the relevant area under consideration is 0 to 125 cm in the X-direction and 10 cm to 44 cm in the Y-direction.

For example, an optical camera is set up that looks at the top of the conveyor belt from a height, and the camera view is continuously processed to keep track of any color changes. Once the package crosses a predetermined boundary line, the camera captures the large color change as compared to the uniformly colored belt surface, and automatically sends a signal so that the radar scanning is triggered. The RF switches provide a communication path from the ports of the radar module to the antennas. First, the Arduino drives the two switches such that they can transmit and receive signals through the Tx-Rx 1 antennas. Then, the radar is configured to complete 20 scans using the parameters highlighted in Table 2. Then the two switches start communicating through the Tx-Rx 2 pair of antennas. Again, 20 scans are completed in the same manner, giving a total of 2m = 40 scans. The scans are further processed and the virtual antenna-based delay-multiply-and-sum (VA-DMAS) technique is applied, after which an image is formed. Based on the images obtained from 210 datasets on different objects, a machine-learning based classification is implemented to determine which class any unknown package under test falls into, where the classes are defined based on one or more use-cases. The boxes containing the objects were chosen at random with respect to their size (i.e., between 15 cm to 20 cm in length and 6 cm to 12 cm in height) and shape. Also, the placement orientations of the boxes on the conveyor belt and that of the objects inside the boxes were randomly varied at different instances of data collection.

The contents of the packages used in the experiment are separated but not limited to three classes: (a) Class 0: Empty i.e., refers to different empty packages of varying size and shape or packages containing non-battery objects like clothes, packaging material, mobile phone with in-built battery etc. (b) Class 1: Laptop battery i.e., refers to different packages containing a single laptop battery (Li-ion) which is larger in size and of different shape from the batteries in Class 2. This class is included as a benchmark of whether a loose Li-ion battery is detected even with the drastic change in size and shape, and (c) Class 2: Li-ion battery i.e., refers to different packages containing several loosely packed small Li-ion batteries stacked together.

The VA-DMAS technique in combination with the PF generates visibly distinct image matrices and can be directly used for discrimination amongst the classes specified earlier. However, for a limited number of objects in the imaging plane, these matrices are typically sparse in nature. To mitigate this effect, a two-directional two-dimensional principal component analysis (2D2D-PCA) transformation on the produced DAS images to yield relevant features that are subsequently used for classification and justify the discriminatory nature of this representation. The 2D2D-PCA maximizes the generalized total scatter criterion, and therefore extracts information from rows as well as columns from the formed image. The output of 2D2D-PCA is then vectorized and used as features. A combination of top k features along the optimal projection axes as generated by the 2D2D-PCA process is selected, flattened, and passed on to a classifier for distinction between separate classes. After performing 2D2D-PCA, only initial dominant eigenvalues (2 in row direction and 5 in column direction) are selected that leads to 2 x 5 output matrix in terms of size. Thus overall, 10 features are used after vectorization. Hence, from 51 x 51 image size are extracted and use only 10 features thereby avoiding overfitting.

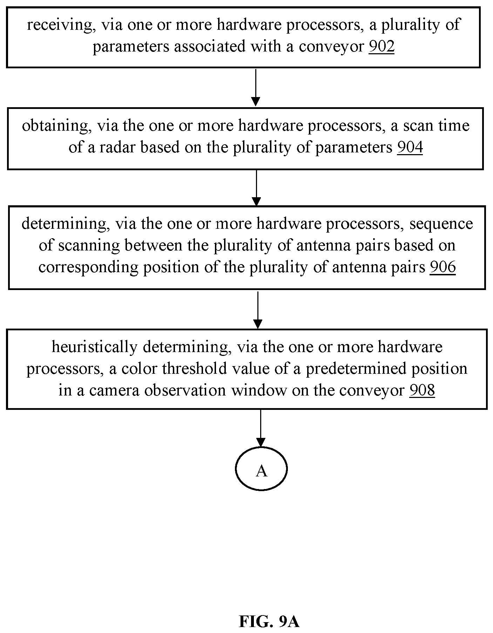

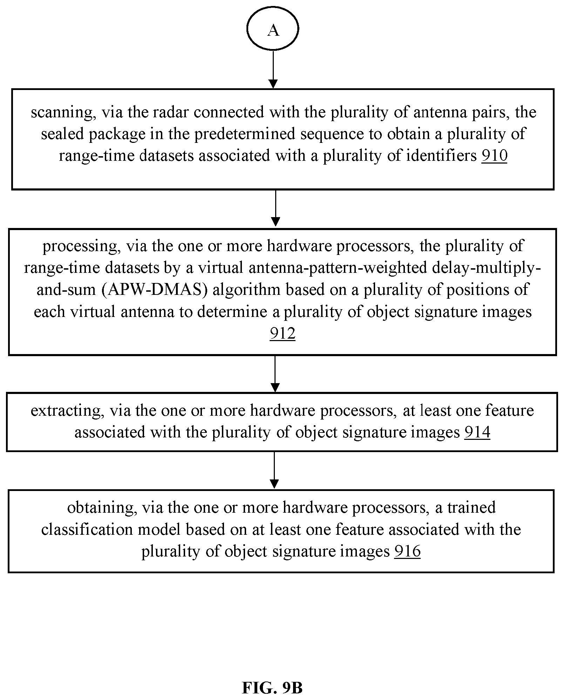

FIG. 9A and FIG. 9B are flow diagrams illustrating a method of detecting one or more objects in one or more sealed packages based on the virtual antenna-based delay-multiply-and-sum (VA-DMAS), according to an embodiment of the present disclosure. In an embodiment, the system 100 comprises one or more data storage devices or the memory 104 operatively coupled to the one or more hardware processors 102 and is configured to store instructions for execution of steps of the method by the one or more processors 102. The flow diagram depicted is better understood by way of following explanation/description. The steps of the method of the present disclosure will now be explained with reference to the components of the system as depicted in FIGS. 1 and 2.

At step 902, one or more parameters associated with the conveyor 208 are received. In an embodiment, the one or more parameters corresponds to: (i) speed of the conveyor 208, (ii) length (L) of the conveyor 208 available for imaging that is determined from a position and a beamwidth of the one or more antenna pairs 204AN, and (iii) number of scans (M). At step 904, a scan time of the radar 202 is obtained based on the one or more parameters. The scan time is divided into equal parts for each antenna pair (Tx-Rx) from the one or more antenna pairs 204A-N. Time interval between each scan is determined based on the scan time of the radar 202. At step 906, a sequence of scanning between the one or more antenna pairs 204A-N is determined based on corresponding position of the one or more antenna pairs 204A-N. At step 908, a color threshold value of a predetermined position is heuristically determined in a camera observation window on the conveyor. If the color threshold value is exceeded as front end of an object under test packed inside the sealed package 210A crosses the predetermined position on the conveyor, and scanning is triggered. The color threshold value corresponds to one or more RGB values. At step 910, the sealed package in the predetermined sequence is scanned by the radar 202 connected with the one or more antenna pairs 204A-N to obtain one or more range-time datasets associated with one or more identifiers. The one or more range-time datasets correspond to one or more reflected signals from the object 206 under test having continuous motion on the conveyer. In an embodiment, the one or more range-time datasets corresponds to a form of a two-dimensional matrix, where the rows are the scans at each time instant, and the columns are the range bins. At step 912, the one or more range-time datasets are processed by a virtual antenna-pattern-weighted delay-multiply-and-sum (APW-DMAS) technique based on one or more positions of each virtual antenna to determine one or more object signature images. In an embodiment, the one or more object signature images is determined by a pattern factor derived based on a radiation pattern from the one or more antenna pairs 204A-N. In an embodiment, the pattern factor corresponds to a synthetic weight factor that heuristically incorporates directivity and gain of each antenna. At step 914, one or more features associated with the plurality of object signature images are extracted. At step 916, a trained classification model is obtained based on the one or more features associated with the one or more object signature images. The trained classification model identifies the class of each object under test from among one or more object under test moving on the conveyor 208. A confidence score for an unknown test object is obtained from the trained classification model to recognize if there is a false alarm raised when the object under test is classified.

In an exemplary embodiment, below mentioned is an exemplary pseudo code for the above-mentioned method steps involved in detecting one or more objects in one or more sealed packages based on the virtual antenna-based delay-multiply-and-sum (VA-DMAS) is described herein. The code is meant to generate an image of the target object, in a horizontal plane, from the radar data, by applying a DMAS method with virtual antenna positions and incorporating the antenna pattern factor (PF) for improving image quality. DATA INPUT: Reflection data from the object that is captured by the radar 202, which is in the form of a 2m X n range-time matrix, M. Apply preprocessing steps and motion filter on M, to obtain the matrix $M_2$. Consider, as constants the conveyor belt speed, number of radar scans, interval time between scans, real antenna positions, the angles made by the antennas with respect to the fixed X, Y, and Z axes, the size and position of imaging plane relative to antenna positions in terms of X, Y, Z coordinates and the number of row and column pixels i.e., called as cross-range and range pixels respectively, that the imaging plane is divided. Generate the virtual antenna positions based on the speed of the belt, number of scans and scan interval, where each scan in $M_2$ indicates a virtual antenna position. The first m scans correspond to the virtual antenna positions of the first antenna pair and the last m scans correspond to the virtual positions of the second antenna pair.

```
FOR i from 1 to No. of cross-range pixels
FOR j from 1 to No. of range pixels
FOR k from 1 to No. of scans
```

Calculate the distance of each pixel i, j (i.e., from their X, Y, Z coordinates $(x_i, y_j, z)$) from each of the virtual antenna positions -> $d_{i,j}(k)$, where k is the scan number. Find the range bin in $k^{th}$ scan of $M_2$ which corresponds to $d_{ij}(k)$.

If the distance $d_{ij}(k)$ is not an integer then find the intensities of the two range bins closest to the distance.

Take the weighted mean of the two intensities, through linear interpolation from time-of-flight calculation, as the contribution to the pixel i,j from the $k^{th}$ scan.

Take into consideration the angles made by the antennas with the X, Y and Z axes by rotating each antenna pair at a particular angle with respect X, Y and Z axes, which is equivalent to an ordered series of rotations, one about each of the principal axes, represented by a standard Euler rotation matrix.

The effective distance of each pixel i,j from each virtual position on the X, Y and Z axes is obtained after this rotation-> $d_{xi}(k)$, $d_{yj}(k)$, $d_z(k)$.

For the first m virtual positions, $d_{xi}(k)$, $d_{yj}(k)$, $d_z(k)$ are obtained by rotation corresponding to the angle of the first antenna pair, while for the last m scans, the $d_{xi}(k)$, $d_{yj}(k)$, $d_z(k)$ are obtained from the rotation of the second antenna pair.

From these distances, calculate the azimuth and elevation angles between the pixel position $(x_i, y_j, z)$ and the antenna position.

Correspond the above angles to the normalized and filtered radiation patterns (i.e., in linear scale) of the antenna in azimuth and elevation planes and find the normalized gain values at those angles.

Take the product of these respective gain values to form the pattern factor $(PF_{i,j})$ that act as weights for synthetic focusing of the image.

Calculate total intensity at the pixel i,j as the sum of the weighted pairwise products of pixel contribution from all the k scans, where $PF_{i,j}$ functions as the individual weights-> $I(x_i, y_j)$.

Normalize the final image with respect to corresponding maximum intensity value.

Display the image in the imaging plane.

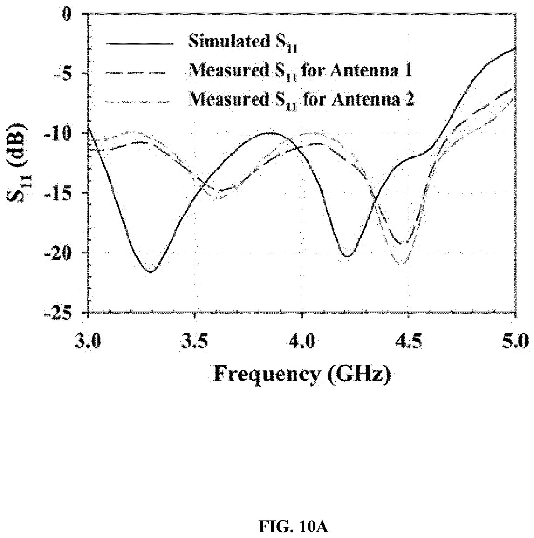

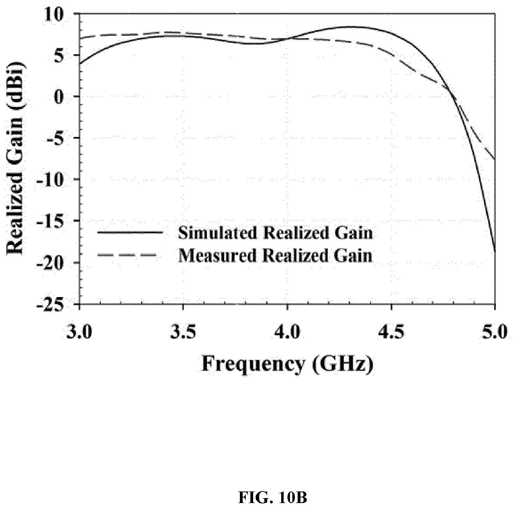

FIG. 10A and FIG. 10B are exemplary graphical representations depicting a simulated and measured (a) return losses of two antennas, and (b) realized gain vs Frequency of the Vivaldi antenna respectively, according to an embodiment of the present disclosure. The simulated and measured results (for two antennas) are shown that the measured $|S_{11}|$ has a good agreement with the simulated results in terms of overall curve shape and bandwidth, only with a 300 MHz deviation of the resonance points towards higher frequencies compared to the simulated results. The measured return losses of the two antennas are also in good agreement with each other, thus showing consistent results. Also, the measured gain vs frequency curve shows good agreement with the simulated result.

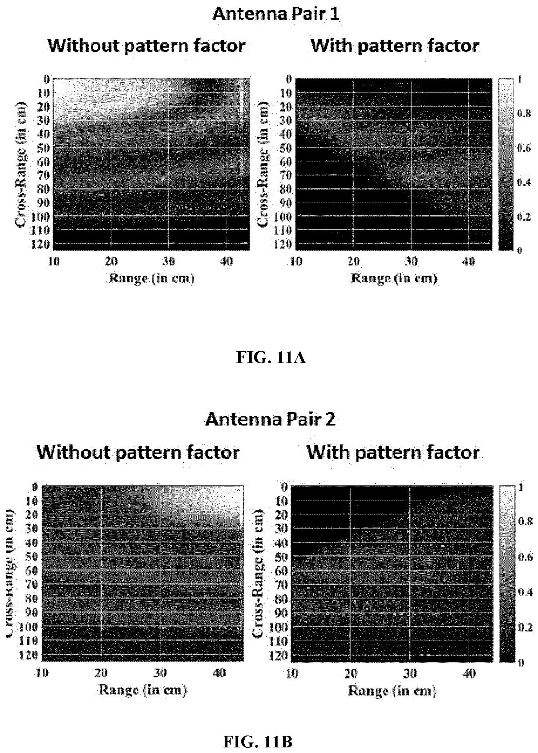

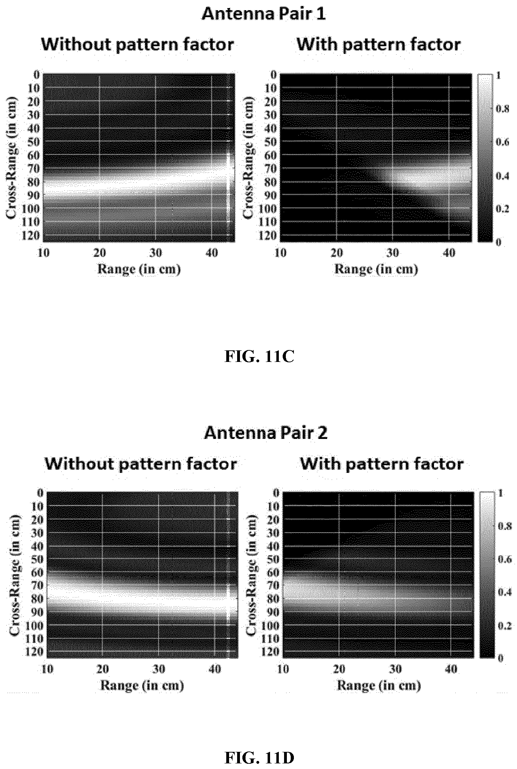

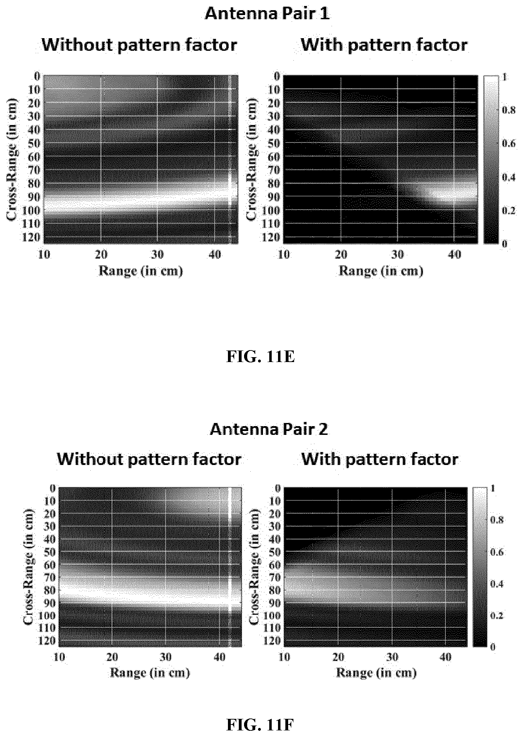

FIG. 11A to FIG. 11F are exemplary graphical representations depicting one or more images obtained by the VA-DMAS from the viewpoints of Tx-Rx1 and Tx-Rx 2, without and with pattern factor, for a representative dataset of: (a) empty box, (b) box containing laptop battery, and (c) box containing a stack of Li-ion batteries respectively, according to an embodiment of the present disclosure. In the observation window of the range-time data, the VA-DMAS technique is applied to obtain the images of the OUT i.e., where the OUT is a representative example of an empty box, a box containing laptop battery and a box containing a stack of Li-ion batteries, in that successive order respectively. The individual range-cross range image, from the data of one representative example of each class of OUT, as obtained from the viewpoint of each of the two Tx-Rx pairs, as well as a comparison between the images obtained without and with incorporating the *PF* from each of the antenna pairs. The images obtained by one Tx-Rx pair are normalized, where the normalization factor is the peak intensity of the image without *PF*, and this factor is used to normalized both the image without *PF* and with *PF*. Similar process is followed for the images obtained by the other Tx-Rx pair which are normalized by the peak intensity of the image without *PF* formed by it. This is repeated for the images of each OUT for each Tx-Rx pair.

The *PF* provides a drastic effect on the generated images by reducing noise and unwanted artifacts by a large extent. Tx-Rx 1 is located at (0,0) and Tx-Rx 2 is located at (46, -12.5cm) of the imaging plane. For the empty box, there is a large region of high intensity near the two antenna locations, which are indicative of noise and unwanted reflections, and this is evident from the fact that after multiplying with *PF*, these noise regions get suppressed and their intensities are reduced from 0.9-1 to 0.4-0.5. On the other hand, for the case of the box containing batteries, there is a high intensity band that is located far from the antenna positions in the imaging plane, which is spread out over all ranges due to undesired noise signals, and after multiplying with the *PF,* the spread gets reduced to a large extent till there is only a small core region of high intensity near the actual object location on the conveyor belt from 30 cm to 40 cm approximately. There is still some spread in the range and cross-range directions, which can be attributed to the fact that the elevation beamwidth of the antenna influences this horizontal cross-section image.

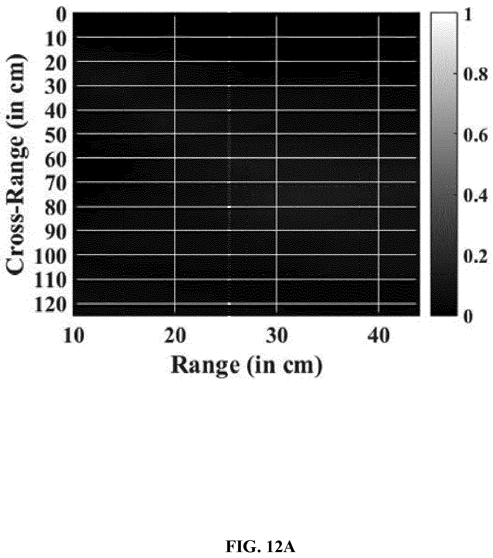

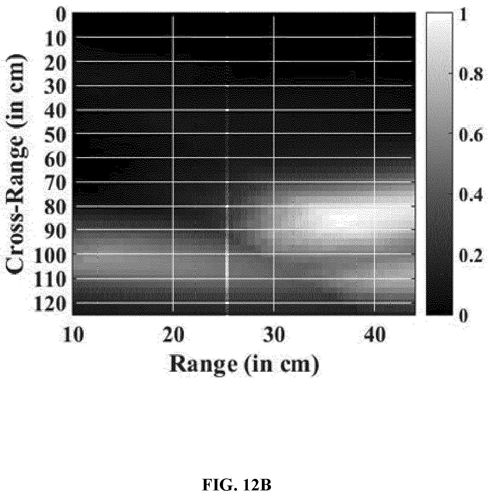

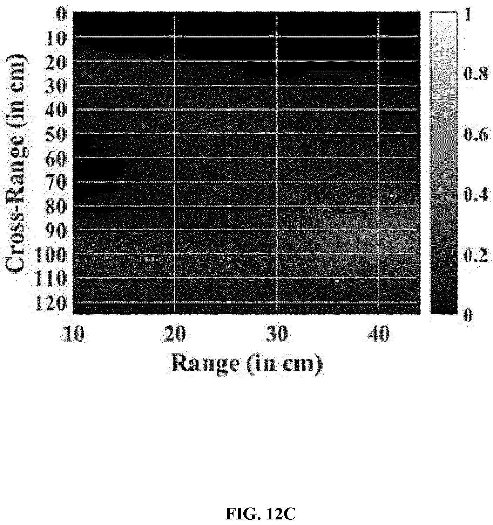

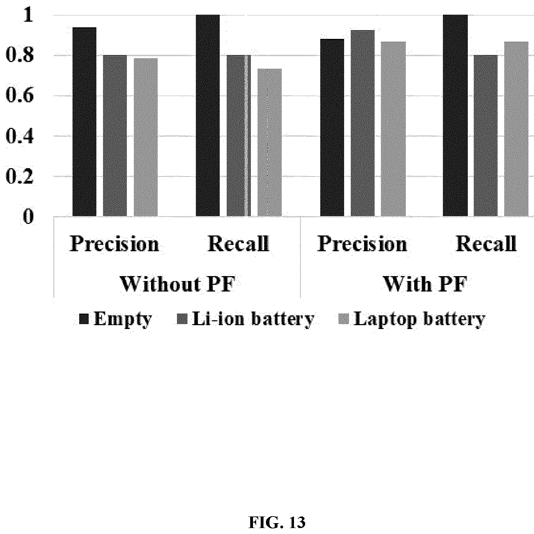

FIG. 12A to FIG. 12C are exemplary graphical representations depicting one or more images obtained by the VA-DMAS from the combined view, with the pattern factor, for a representative dataset of: (a) empty box, (b) box containing laptop battery, and (c) box containing a stack of Li-ion batteries respectively, according to an embodiment of the present disclosure. The images have been normalized with respect to the peak intensity value of (b). The chosen datasets of each class of the OUT, the combined view of the two antenna pairs is displayed, where the pattern factors have been incorporated. Here, the three images are normalized with respect to the peak intensity value of the combined view image of the laptop battery since corresponding highest peak intensity of the three objects which shows that the final actual image formed using the VA-DMAS and the PF, have the object location (i.e., indicated by the high intensity zones) very near to their real positions in the experiment and the empty box image is almost at zero intensity at all pixels. The relative intensity differences of the three classes of OUT are demonstrated, which is nearly consistent over all the datasets collected for all the classes. The relative differences in the images as shown in FIG. 13 act as a strong basis of discrimination between the classes.

The feature vector obtained by performing the 2D2D-PCA on the DAS images for all cases was arranged in various training and testing sets. There are a total of 70 data instances per class, and hence a total of 210 instances for all classes. A random 165:45 split of the data is performed for training and testing, while maintaining an equal representation for each class in each of the sets. The feature performance of four classifiers is compared using the 2D2D-PCA features are as mentioned in Table 4, where the role played by the *PF* in generating a better representation in the imaging plane are evaluated.

**TABLE 4**

| Classifier | Accuracy without PF | Accuracy with *PF* |
|---|---|---|
| kNN with 3 neighbors | 78.7% | 85.2% |
| kNN with 5 neighbors | 71.2% | 79.4% |
| SVM with Linear Kernel | 79% | 81.3% |
| SVM with Radial Basis Function (RBF) Kernel | 71.3% | 83.3% |
| Bagged Decision Tree | 81.7% | 86.9% |
| Random Forest | 81.6% | 87.5% |

The ensemble classifiers generally perform well on the 2D2D-PCA features as compared to the kNN (k Nearest Neighbors) and SVM (Support Vector Machine) classifiers, even when the PF is not included in the VA-DMAS image before computation of the feature vector. This is because ensemble methods generally discourage overfitting and work well for smaller datasets. All the classifiers perform markedly better after incorporation of the PF in the VA-DMAS image, with an average in accuracy of 7.5%. Therefore, Table 4 provides conclusive justification for the proposed methodology and the usefulness of the PF. Similarly, kNN, SVM, Bagged Tree and Random Forest classifiers were compared. The Random Forest classifier shows the best performance when considering the 5-fold cross-validation accuracy during training. Hence, testing on unseen data is performed only for the same classifier. The testing accuracy on unseen data was 82.4% and 88.9% when the PF was omitted and used in the VA-DMAS image respectively. The testing accuracy is slightly higher than the training accuracy and may occur when the model acts as an excellent predictor and has learnt the boundary cases well. Also, when the validation data, although selected randomly, ends up having less complexity.

FIG. 13 is an exemplary graphical representation depicting precision and recall values for different classes using the Random Forest classifier, according to an embodiment of the present disclosure. Apart from accuracy, specific precision and recall values for each class are also important in characterizing a classifier. The maximum recall values are always obtained for the empty box class. The minimum precision and recall values for all classes are increased when the *PF* is included. Moreover, the variance in precision and recall between classes is also reduced substantially when the *PF* is used. The average values of precision and recall when the *PF* is used are 0.89 (standard deviation = $\pm$ .02) and 0.89 (standard deviation = $\pm$ .1) respectively.

The embodiment of the present disclosure herein addresses the unresolved problem of detecting objects in the sealed packages. The embodiment of the present disclosure provides an approach of detecting objects in sealed packages based on machine learning-driven radar imaging. The embodiment of the present disclosure utilizes an UWB radar with pulsed signal, with two sets of Tx-Rx antennas connected to a single radar module, arranged on both sides of the conveyor belt at different elevation planes to automatically collect the 3D data of the package. The object type is decided purely based on the images obtained from the radar data, on which machine learning classifier is trained to detect the undesired objects, and this classifier can then automatically characterize the contents of the unknown test object. Radar Imaging is the main process of object detection and identification. Furthermore, no bulky metal detector structure is required, nor is a large array of radar-antenna subsystems, thus increasing the portability and lowering the cost of the system. The embodiment thus improves the image distinctiveness thereby the detection accuracy is increased to 88.9% from 82.4% when the antenna pattern is not considered in computation and after incorporating the antenna pattern for calculating the synthetic weights, in the form of the pattern factor (PF) in the VA-DMAS technique. The high directivity coplanar Vivaldi antennas are fabricated, and the whole radar system is implemented. The beamwidth is narrow- provide better resolution of the images formed. From the obtained VA-DMAS images, after introduction of the PF, the image quality and accuracy have drastically improved compared to the case without the PF. Virtual Antenna Positions and higher reflectivity obtained because of motion of object i.e., occluded is not obvious. Also, the method of adjusting scan interval based on velocity of object in motion, and the heuristic method of ascertaining the antenna positions and orientations is performed based on the knowledge of working in this domain.

The embodiment of the present disclosure mitigates ambiguity by using the antenna pattern which is not obvious. Another point of difference in the VA-DMAS technique from the standard delay-and-sum (DAS) or DMAS techniques lies in the fact that VA-DMAS technique is meant to work in a linear setup, i.e., when the target object is moving in a straight line with a certain speed on a conveyor belt through the observation zones of the radar antennas. The APW-DMAS technique is utilized to create an image of the object from the radar return data. Then, the features are extracted from each image of each known object, using a 2D2D-PCA technique, where the input data are the intensity values of the image pixels and no conversion to frequency domain is required. Finally, training a classifier based on these features and use the classifier model to automatically detect the type of unknown object in the sealed package. The embodiment of the present disclosure utilizes only two pairs of Tx-Rx antennas to observe the object moving in a straight line in between their respective positions. One of the antenna pairs is in the same plane as the object on the conveyor belt, while the other was looking down at the object from an elevated plane. The two antenna pairs obtain a view of the object from the front end left sides and from the top, front, and right sides respectively. Thus, providing a good approximation of the object's position and size. Also, the antennas are not operated simultaneously, rather they are switched on one at a time in a sequential order, thus collecting data of the object at different time instances and thus different positions on the conveyor belt. Moreover, the concept of Virtual antenna introduced in, which is useful for this sort of Inverse SAR imaging scenario. The PF is applied by which the image becomes far more refined with a core elliptical region of high intensity at the expected object position with a diffraction halo in all directions that taper off over a small range. Therefore, the introduction of the PF causes a drastic change in the quality, accuracy, and resolution of the images.

The written description describes the subject matter herein to enable any person skilled in the art to make and use the embodiments. The scope of the subject matter embodiments is defined by the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (900) for detecting objects in a sealed package based on virtual antenna-based delay-multiply-and-sum, VA-DMAS, comprising:

   receiving (902), via one or more hardware processors, a plurality of parameters associated with a conveyor;
   obtaining (904), via the one or more hardware processors, a scan time of a radar based on the plurality of parameters, wherein the scan time is divided into equal parts for each antenna pair (Tx-Rx) from a plurality of antenna pairs, wherein the plurality of antenna pairs are designed for a narrow beamwidth and a high gain, wherein time interval between each scan is determined based on the scan time of the radar;
   determining (906), via the one or more hardware processors, sequence of scanning between the plurality of antenna pairs based on corresponding position of the plurality of antenna pairs;
   heuristically determining (908), via the one or more hardware processors, a color threshold value of a predetermined position in a camera observation window on the conveyor, wherein scanning is triggered if the color threshold value is exceeded as front end of an object under test packed inside a sealed package crosses the predetermined position on the conveyor, and wherein the color threshold value corresponds to a plurality of RGB values;
   when scanning is triggered, scanning (910), via the radar connected with the plurality of antenna pairs, the sealed package in the predetermined sequence to obtain a plurality of range-time datasets associated with a plurality of identifiers, wherein the plurality of range-time datasets corresponds to a plurality of reflected signals from the object under test having continuous motion on the conveyor, wherein the plurality of range-time datasets correspond to a two-dimensional matrix, wherein rows are scans at each time instant, and columns are range bins;
   processing (912), via the one or more hardware processors, the plurality of range-time datasets by a virtual antenna-pattern-weighted delay-multiply-and-sum, APW-DMAS,
   technique based on a plurality of positions of each virtual antenna to determine a plurality of object signature images, wherein the plurality of object signature images is determined by a pattern factor derived based on a radiation pattern from the plurality of antenna pairs, and wherein the pattern factor corresponds to a synthetic weight factor that heuristically incorporates directivity and gain of each antenna, wherein the antenna is designed to provide high resolution of the plurality of object signature images on incoming package due to the increased angular resolution obtained from the greater directivity and incorporating, effect of directivity by introducing a synthetic multiplier to image pixel values, wherein the synthetic multiplier refines the plurality of object signature images by suppressing noise and removing unwanted artifacts; forming, a synthetically focused plurality of object signature images, by eliminating an ambiguity due to strong reflection from an undesired reflector, by incorporating a normalized radiation pattern of the designed antenna, from azimuth and elevation planes into APW-DMAS technique;

extracting (914), via the one or more hardware processors, at least one feature associated with the plurality of object signature images; and

obtaining (916), via the one or more hardware processors, a trained machine learning classification model based on at least one feature associated with the plurality of object signature images,

and automatically identifies class of each object under test from among a plurality of object under test moving on the conveyor using the trained machine learning classification model.

2. The processor implemented method (900) as claimed in claim 1, wherein the plurality of

parameters corresponds to: (i) speed of the conveyor, (ii) length, L,
of the conveyor available for imaging that is determined from a position and a beamwidth of the plurality of antenna pairs, and (iii) number of scans, M.

3. The processor implemented method (900) as claimed in claim 1, wherein a confidence score for an unknown test object is obtained from the trained classification model to recognize if there is a false alarm raised when the object under test is classified.

4. A system (100) for detecting objects in a sealed package based on virtual antenna-based delay-multiply-and-sum, VA-DMAS, comprising:

a memory (104) storing instructions;
one or more communication interfaces (106); and
one or more hardware processors (102) coupled to the memory (104) via the one or more communication interfaces (106), wherein the one or more hardware processors (102) are configured by the instructions to:

receive, a plurality of parameters associated with a conveyor (208);
obtain, a scan time of a radar (202) based on the plurality of parameters, wherein the scan time is divided into equal parts for each antenna pair, Tx-Rx, (204A) from a plurality of antenna pairs (204A-N), wherein the plurality of antenna pairs are designed for a narrow beamwidth and a high gain, wherein time interval between each scan is determined based on the scan time of the radar (202);
determine, sequence of scanning between the plurality of antenna pairs (204A-N) based on corresponding position of the plurality of antenna pairs (204A-N);
heuristically determine, a color threshold value of a predetermined position in a camera observation window on the conveyor (208), wherein scanning is triggered if the color threshold value is exceeded as front end of an object (206) under test packed inside a sealed package (210A) crosses the predetermined position on the conveyor (208), and wherein the color threshold value corresponds to a plurality of RGB values;
when scanning is triggered, scan, via the radar (202) connected with the plurality of antenna pairs (204A-N), the sealed package (210A) in the predetermined sequence to obtain a plurality of range-time datasets associated with a plurality of identifiers, wherein the plurality of range-time datasets corresponds to a plurality of reflected signals from the object (206) under test having continuous motion on the conveyor, wherein the plurality of range-time datasets correspond to a two-dimensional matrix, wherein rows are scans at each time instant, and columns are range bins;

process, the plurality of range-time datasets by a virtual antenna-pattern-weighted delay-multiply-and-sum, APW-DMAS, technique based on a plurality of positions of each virtual antenna to determine a plurality of object signature images, wherein the plurality of object signature images is determined by a pattern factor derived based on a radiation pattern from the plurality of antenna pairs, and wherein the pattern factor corresponds to a synthetic weight factor that heuristically incorporates directivity and gain of each antenna, wherein the antenna is designed to provide high resolution of the plurality of object signature images on incoming package due to the increased angular resolution obtained from the greater directivity and incorporating, effect of directivity by introducing a synthetic multiplier to image pixel values, wherein the synthetic multiplier refines the plurality of object signature images by suppressing noise and removing unwanted artifacts;

form, a synthetically focused plurality of object signature images, by eliminating an ambiguity due to strong reflection from an undesired reflector, by incorporating a normalized radiation pattern of the designed antenna, from azimuth and elevation planes into APW-DMAS technique;

extract, at least one feature associated with the plurality of object signature images; and

obtain, a trained machine learning classification model based on at least one feature associated with the plurality of object signature images, and automatically identifies class of each object (206) under test from among a plurality of object under test moving on the conveyor (208) using the trained machine learning classification model.

5. The system (100) as claimed in claim 4, wherein the plurality of parameters corresponds to: (i) speed of the conveyor (208), (ii) length, of the conveyor (208) available for imaging that is determined from a position and a beamwidth of the plurality of antenna pairs (204A-N), and (iii) number of scans, M.

6. The system (100) as claimed in claim 4, wherein a confidence score for an unknown test object is obtained from the trained classification model to recognize if there is a false alarm raised when the object (206) under test is classified.

7. One or more non-transitory machine-readable information storage mediums for detecting objects in a sealed package based on virtual antenna-based delay-multiply-and-sum, VA-DMAS, comprising one or more instructions which when executed by one or more hardware processors cause:

receiving, a plurality of parameters associated with a conveyor;

obtaining, a scan time of a radar based on the plurality of parameters, wherein the scan time is divided into equal parts for each antenna pair, Tx-Rx, from a plurality of antenna pairs, wherein the plurality of antenna pairs are designed for a narrow beamwidth and a high gain, wherein time interval between each scan is determined based on the scan time of the radar;

determining, sequence of scanning between the plurality of antenna pairs based on corresponding position of the plurality of antenna pairs;

heuristically determining, a color threshold value of a predetermined position in a camera observation window on the conveyor, wherein scanning is triggered if the color threshold value is exceeded as front end of an object under test packed inside a sealed package crosses the predetermined position on the conveyor, and wherein the color threshold value corresponds to a plurality of RGB values;

when scanning is triggered, scanning, via the radar connected with the plurality of antenna pairs, the sealed package in the predetermined sequence to obtain a plurality of range-time datasets associated with a plurality of identifiers, wherein the plurality of range-time datasets corresponds to a plurality of reflected signals from the object under test having continuous motion on the conveyor, wherein the plurality of range-time datasets correspond to a two-dimensional matrix, wherein rows are scans at each time instant, and columns are range bins;

processing, the plurality of range-time datasets by a virtual antenna-pattern-weighted delay-multiply-and-sum, APW-DMAS,

technique based on a plurality of positions of each virtual antenna to determine a plurality of object signature images, wherein the plurality of object signature images is determined by a pattern factor derived based on a radiation pattern from the plurality of antenna pairs, and wherein the pattern factor corresponds to a synthetic weight factor that heuristically incorporates directivity and gain of each antenna, wherein the antenna is designed to provide high resolution of the plurality of object signature images on incoming package due to the increased angular resolution obtained from the greater directivity and incorporating, effect of directivity by introducing a synthetic multiplier to image pixel values, wherein the synthetic multiplier refines the plurality of object signature images by suppressing noise and removing unwanted artifacts;

forming, a synthetically focused plurality of object signature images, by eliminating an ambiguity due to strong reflection from an undesired reflector, by incorporating a normalized radiation pattern of the designed antenna, from azimuth and elevation planes into APW-DMAS technique;

extracting, at least one feature associated with the plurality of object signature images; and

obtaining, a trained machine learning classification model based on at least one feature associated with the plurality of object signature images, and automatically identifies class of each object under test from among a

EP 4 439 114 B1

plurality of object under test moving on the conveyor using the trained machine learning classification model.

8. The one or more non-transitory machine-readable information storage mediums as claimed in claim 7, wherein the plurality of parameters corresponds to: (i) speed of the conveyor, (ii) length, L, of the conveyor available for imaging that is determined from a position and a beamwidth of the plurality of antenna pairs, and (iii) number of scans, M.

9. The one or more non-transitory machine-readable information storage mediums as claimed in claim 7 wherein a confidence score for an unknown test object is obtained from the trained classification model to recognize if there is a false alarm raised when the object under test is classified.

**Patentansprüche**

1. Prozessorimplementiertes Verfahren (900) zum Detektieren von Objekten in einem versiegelten Paket basierend auf virtuellen antennenbasierten Verzögerungs-Multiplizieren-und-Addieren (Virtual Antenna-Based Delay-Multiply-And-Sum), VA-DMAS, umfassend:

Empfangen (902), über einen oder mehrere Hardwareprozessoren, einer Mehrzahl von Parametern, die einem Förderer zugeordnet sind;

Erhalten (904), über den einen oder die mehreren Hardwareprozessoren, einer Abtastzeit eines Radars basierend auf der Mehrzahl von Parametern, wobei die Abtastzeit in gleiche Teile für jedes Antennenpaar (Tx-Rx) aus einer Mehrzahl von Antennenpaaren unterteilt ist, wobei die Mehrzahl von Antennenpaaren für eine schmale Strahlbreite und eine hohe Verstärkung ausgelegt ist, wobei ein Zeitintervall zwischen jeder Abtastung basierend auf der Abtastzeit des Radars bestimmt wird;

Bestimmen (906), über den einen oder die mehreren Hardwareprozessoren, einer Abtastsequenz zwischen der Mehrzahl von Antennenpaaren basierend auf einer entsprechenden Position der Mehrzahl von Antennenpaaren;

heuristisches Bestimmen (908), über den einen oder die mehreren Hardwareprozessoren, eines Farbschwellenwerts einer vorbestimmten Position in einem Kamerabeobachtungsfenster auf dem Förderer, wobei das Abtasten ausgelöst wird, wenn der Farbschwellenwert überschritten wird, während ein vorderes Ende eines zu prüfenden Objekts, das in einem versiegelten Paket verpackt ist, die vorbestimmte Position auf dem Förderer kreuzt, und wobei der Farbschwellenwert einer Mehrzahl von RGB-Werten entspricht;

wenn das Abtasten ausgelöst wird, Abtasten (910), über das Radar, das mit der Mehrzahl von Antennenpaaren verbunden ist, des versiegelten Pakets in der vorbestimmten Sequenz, um eine Mehrzahl von Entfernungs-Zeit-Datensätzen zu erhalten, die einer Mehrzahl von Kennungen zugeordnet sind, wobei die Mehrzahl von Entfernungs-Zeit-Datensätzen einer Mehrzahl von reflektierten Signalen von dem zu prüfenden Objekt mit einer kontinuierlichen Bewegung auf dem Förderer entspricht, wobei die Mehrzahl von Entfernungs-Zeit-Datensätzen einer zweidimensionalen Matrix entspricht, wobei Zeilen Abtastungen zu jedem Zeitpunkt sind und Spalten Entfernungs-Bins sind;

Verarbeiten (912), über den einen oder die mehreren Hardwareprozessoren, der Mehrzahl von Entfernungs-Zeit-Datensätzen durch eine virtuelle Antennenmuster-gewichtete Verzögerungs-Multiplizier-und-Summen-Technik (Antenna-Pattern-Weighted-Delay-Multiply-And-Sum), APW-DMAS-Technik, basierend auf einer Mehrzahl von Positionen jeder virtuellen Antenne, um eine Mehrzahl von Objektsignaturbildern zu bestimmen, wobei die Mehrzahl von Objektsignaturbildern durch einen Musterfaktor bestimmt wird, der basierend auf einem Strahlungsmuster von der Mehrzahl von Antennenpaaren abgeleitet ist, und wobei der Musterfaktor einem synthetischen Gewichtungsfaktor entspricht, der heuristisch eine Richtwirkung und Verstärkung jeder Antenne integriert, wobei die Antenne ausgelegt ist, um eine hohe Auflösung der Mehrzahl von Objektsignaturbildern auf einem ankommenden Paket aufgrund der erhöhten Winkelauflösung, die aus der größeren Richtwirkung erhalten wird, bereitzustellen und einen Effekt der Richtwirkung durch Einführen eines synthetischen Multiplizierers in Bildpixelwerte zu integrieren, wobei der synthetische Multiplizierer die Mehrzahl von Objektsignaturbildern durch Unterdrücken von Rauschen und Entfernen unerwünschter Artefakte verfeinert; Bilden einer synthetisch fokussierten Mehrzahl von Objektsignaturbildern durch Eliminieren einer Mehrdeutigkeit aufgrund starker Reflexion von einem unerwünschten Reflektor durch Einbeziehen eines normalisierten Strahlungsmusters der entworfenen Antenne aus Azimut- und Höhenebenen in die APW-DMAS-Technik;

Extrahieren (914), über den einen oder die mehreren Hardwareprozessoren, mindestens eines Merkmals, das der Mehrzahl von Objektsignaturbildern zugeordnet ist; und

Erhalten (916), über den einen oder die mehreren Hardwareprozessoren, eines trainierten maschinellen Lemklassifikationsmodells basierend auf mindestens einem Merkmal, das der Mehrzahl von Objektsignaturbildern zugeordnet ist,
und automatisch eine Klasse jedes zu prüfenden Objekts aus einer Mehrzahl von zu prüfenden Objekten, die sich auf dem Förderer bewegen, unter Verwendung des trainierten maschinellen Lemklassifikationsmodells identifiziert.

2. Prozessorimplementiertes Verfahren (900) nach Anspruch 1, wobei die Mehrzahl von Parametern Folgendem entspricht: (i) einer Geschwindigkeit des Förderers, (ii) einer Länge, L, des Förderers, die zur Bildgebung verfügbar ist, die aus einer Position und einer Strahlbreite der Mehrzahl von Antennenpaaren bestimmt wird, und (iii) einer Anzahl von Abtastungen, M.

3. Prozessorimplementiertes Verfahren (900) nach Anspruch 1, wobei ein Konfidenzwert für ein unbekanntes Prüfobjekt aus dem trainierten Klassifikationsmodell erhalten wird, um zu erkennen, ob ein falscher Alarm ausgelöst wird, wenn das zu prüfende Objekt klassifiziert wird.

4. System (100) zum Detektieren von Objekten in einem versiegelten Paket basierend auf virtuellen antennenbasierten Verzögerungs-Multiplizieren-und-Addieren (Virtual Antenna-Based Delay-Multiply-And-Sum), VA-DMAS, umfassend:

einen Speicher (104), der Anweisungen speichert;
eine oder mehrere Kommunikationsschnittstellen (106); und
einen oder mehrere Hardwareprozessoren (102), die mit dem Speicher (104) über die eine oder die mehreren Kommunikationsschnittstellen (106) gekoppelt sind, wobei der eine oder die mehreren Hardwareprozessoren (102) durch die Anweisungen konfiguriert sind zum:

Empfangen einer Mehrzahl von Parametern, die einem Förderer (208) zugeordnet sind;
Erhalten einer Abtastzeit eines Radars (202) basierend auf der Mehrzahl von Parametern, wobei die Abtastzeit in gleiche Teile für jedes Antennenpaar, Tx-Rx, (204A) aus einer Mehrzahl von Antennenpaaren (204A-N) unterteilt ist, wobei die Mehrzahl von Antennenpaaren für eine schmale Strahlbreite und eine hohe Verstärkung ausgelegt ist, wobei ein Zeitintervall zwischen jeder Abtastung basierend auf der Abtastzeit des Radars (202) bestimmt wird;
Bestimmen einer Abtastsequenz zwischen der Mehrzahl von Antennenpaaren (204A-N) basierend auf einer entsprechenden Position der Mehrzahl von Antennenpaaren (204A-N);
heuristisches Bestimmen eines Farbschwellenwerts einer vorbestimmten Position in einem Kamerabeobachtungsfenster auf dem Förderer (208), wobei das Abtasten ausgelöst wird, wenn der Farbschwellenwert überschritten wird, während ein vorderes Ende eines zu prüfenden Objekts (206), das in einem versiegelten Paket (210A) verpackt ist, die vorbestimmte Position auf dem Förderer (208) kreuzt, und wobei der Farbschwellenwert einer Mehrzahl von RGB-Werten entspricht;
wenn das Abtasten ausgelöst wird, Abtasten, über das Radar (202), das mit der Mehrzahl von Antennenpaaren (204A-N) verbunden ist, des versiegelten Pakets (210A) in der vorbestimmten Sequenz, um eine Mehrzahl von Entfernungs-Zeit-Datensätzen zu erhalten, die einer Mehrzahl von Kennungen zugeordnet sind, wobei die Mehrzahl von Entfernungs-Zeit-Datensätzen einer Mehrzahl von reflektierten Signalen von dem zu prüfenden Objekt (206) mit einer kontinuierlichen Bewegung auf dem Förderer entspricht, wobei die Mehrzahl von Entfernungs-Zeit-Datensätzen einer zweidimensionalen Matrix entspricht, wobei Zeilen Abtastungen zu jedem Zeitpunkt sind und Spalten Entfernungs-Bins sind;
Verarbeiten der Mehrzahl von Entfernungs-Zeit-Datensätzen durch eine virtuelle Antennenmuster-gewichtete Verzögerungs-Multiplizier-und-Summen-Technik (Antenna-Pattern-Weighted Delay-Multiply-And-Sum), APW-DMAS-Technik, basierend auf einer Mehrzahl von Positionen jeder virtuellen Antenne, um eine Mehrzahl von Objektsignaturbildern zu bestimmen, wobei die Mehrzahl von Objektsignaturbildern durch einen Musterfaktor bestimmt wird, der basierend auf einem Strahlungsmuster von der Mehrzahl von Antennenpaaren abgeleitet ist, und wobei der Musterfaktor einem synthetischen Gewichtungsfaktor entspricht, der heuristisch eine Richtwirkung und Verstärkung jeder Antenne integriert, wobei die Antenne ausgelegt ist, um eine hohe Auflösung der Mehrzahl von Objektsignaturbildern auf einem ankommenden Paket aufgrund der erhöhten Winkelauflösung, die aus der größeren Richtwirkung erhalten wird, bereitzustellen und einen Effekt der Richtwirkung durch Einführen eines synthetischen Multiplizierers in Bildpixelwerte zu integrieren, wobei der synthetische Multiplizierer die Mehrzahl von Objektsignaturbildern durch Unterdrücken von Rauschen und Entfernen unerwünschter Artefakte verfeinert;
Bilden einer synthetisch fokussierten Mehrzahl von Objektsignaturbildern durch Eliminieren einer Mehrdeutigkeit aufgrund einer starken Reflexion von einem unerwünschten Reflektor durch Integrieren eines normalisierten Strahlungsmusters der ausgelegten Antenne aus Azimut- und Höhenebenen in die APW-DMAS-Technik;

Extrahieren mindestens eines Merkmals, das der Mehrzahl von Objektsignaturbildern zugeordnet ist; und

Erhalten eines trainierten maschinellen Lemklassifikationsmodells basierend auf mindestens einem Merkmal, das der Mehrzahl von Objektsignaturbildern zugeordnet ist, und automatisches Identifizieren einer Klasse jedes zu prüfenden Objekts (206) aus einer Mehrzahl von zu prüfenden Objekten, die sich auf dem Förderer (208) bewegen, unter Verwendung des trainierten maschinellen Lemklassifikationsmodells.

5. System (100) nach Anspruch 4, wobei die Mehrzahl von Parametern Folgendem entspricht: (i) einer Geschwindigkeit des Förderers (208), (ii) einer Länge, L, des Förderers (208), die zur Bildgebung verfügbar ist, die aus einer Position und einer Strahlbreite der Mehrzahl von Antennenpaaren (204A-N) bestimmt wird, und (iii) einer Anzahl von Abtastungen, M.

6. System (100) nach Anspruch 4, wobei ein Konfidenzwert für ein unbekanntes Prüfobjekt aus dem trainierten Klassifikationsmodell erhalten wird, um zu erkennen, ob ein falscher Alarm ausgelöst wird, wenn das zu prüfende Objekt (206) klassifiziert wird.

7. Ein oder mehrere nichtflüchtige maschinenlesbare Informationsspeichermedien zum Detektieren von Objekten in einem versiegelten Paket basierend auf virtuellen antennenbasierten Verzögerungs-Multiplizieren-und-Addieren (Virtual Antenna-Based Delay-Multiply-And-Sum), VA-DMAS, umfassend eine oder mehrere Anweisungen, die bei Ausführung durch einen oder mehrere Hardwareprozessoren Folgendes bewirken:

Empfangen einer Mehrzahl von Parametern, die einem Förderer zugeordnet sind;

Erhalten einer Abtastzeit eines Radars basierend auf der Mehrzahl von Parametern, wobei die Abtastzeit in gleiche Teile für jedes Antennenpaar, Tx-Rx, aus einer Mehrzahl von Antennenpaaren unterteilt ist, wobei die Mehrzahl von Antennenpaaren für eine schmale Strahlbreite und eine hohe Verstärkung ausgelegt ist, wobei ein Zeitintervall zwischen jeder Abtastung basierend auf der Abtastzeit des Radars bestimmt wird;

Bestimmen einer Abtastsequenz zwischen der Mehrzahl von Antennenpaaren basierend auf einer entsprechenden Position der Mehrzahl von Antennenpaaren;

heuristisches Bestimmen eines Farbschwellenwerts einer vorbestimmten Position in einem Kamerabeobachtungsfenster auf dem Förderer, wobei das Abtasten ausgelöst wird, wenn der Farbschwellenwert überschritten wird, während ein vorderes Ende eines zu prüfenden Objekts, das in einem versiegelten Paket verpackt ist, die vorbestimmte Position auf dem Förderer kreuzt, und wobei der Farbschwellenwert einer Mehrzahl von RGB-Werten entspricht;

wenn das Abtasten ausgelöst wird, Abtasten, über das Radar, das mit der Mehrzahl von Antennenpaaren verbunden ist, des versiegelten Pakets in der vorbestimmten Sequenz, um eine Mehrzahl von Entfernungs-Zeit-Datensätzen zu erhalten, die einer Mehrzahl von Kennungen zugeordnet sind, wobei die Mehrzahl von Entfernungs-Zeit-Datensätzen einer Mehrzahl von reflektierten Signalen von dem zu prüfenden Objekt mit einer kontinuierlichen Bewegung auf dem Förderer entspricht, wobei die Mehrzahl von Entfernungs-Zeit-Datensätzen einer zweidimensionalen Matrix entspricht, wobei Zeilen Abtastungen zu jedem Zeitpunkt sind und Spalten Entfernungs-Bins sind;

Verarbeiten der Mehrzahl von Entfernungs-Zeit-Datensätzen durch eine virtuelle Antennenmuster-gewichtete Verzögerungs-Multiplizier-und-Summen-Technik (Virtual Antenna-Pattern-Weighted Delay-Multiply-And-Sum), APW-DMAS-Technik, basierend auf einer Mehrzahl von Positionen jeder virtuellen Antenne, um eine Mehrzahl von Objektsignaturbildern zu bestimmen, wobei die Mehrzahl von Objektsignaturbildern durch einen Musterfaktor bestimmt wird, der basierend auf einem Strahlungsmuster von der Mehrzahl von Antennenpaaren abgeleitet ist, und wobei der Musterfaktor einem synthetischen Gewichtungsfaktor entspricht, der heuristisch eine Richtwirkung und Verstärkung jeder Antenne integriert, wobei die Antenne ausgelegt ist, um eine hohe Auflösung der Mehrzahl von Objektsignaturbildern auf einem ankommenden Paket aufgrund der erhöhten Winkelauflösung, die aus der größeren Richtwirkung erhalten wird, bereitzustellen und einen Effekt der Richtwirkung durch Einführen eines synthetischen Multiplizierers in Bildpixelwerte zu integrieren, wobei der synthetische Multiplizierer die Mehrzahl von Objektsignaturbildern durch Unterdrücken von Rauschen und Entfernen unerwünschter Artefakte verfeinert;

Bilden einer synthetisch fokussierten Mehrzahl von Objektsignaturbildern durch Eliminieren einer Mehrdeutigkeit aufgrund einer starken Reflexion von einem unerwünschten Reflektor durch Integrieren eines normalisierten Strahlungsmusters der ausgelegten Antenne aus Azimut- und Höhenebenen in die APW-DMAS-Technik; Extrahieren mindestens eines Merkmals, das der Mehrzahl von Objektsignaturbildern zugeordnet ist; und Erhalten eines trainierten maschinellen Lernklassifikationsmodells basierend auf mindestens einem Merkmal, das der Mehrzahl von Objektsignaturbildern zugeordnet ist, und automatisches Identifizieren einer Klasse jedes zu prüfenden Objekts aus einer Mehrzahl von zu prüfenden Objekten, die sich auf dem Förderer bewegen, unter Verwendung des trainierten maschinellen Lernklassifikationsmodells.

8. Ein oder mehrere nichtflüchtige maschinenlesbare Informationsspeichermedien nach Anspruch 7, wobei die Mehrzahl von Parametern Folgendem entspricht: (i) einer Geschwindigkeit des Förderers, (ii) einer Länge, L, des Förderers, die zur Bildgebung verfügbar ist, die aus einer Position und einer Strahlbreite der Mehrzahl von Antennenpaaren bestimmt wird, und (iii) einer Anzahl von Abtastungen, M.

9. Ein oder mehrere nichtflüchtige maschinenlesbare Informationsspeichermedien nach Anspruch 7, wobei ein Konfidenzwert für ein unbekanntes Prüfobjekt aus dem trainierten Klassifikationsmodell erhalten wird, um zu erkennen, ob ein falscher Alarm ausgelöst wird, wenn das zu prüfende Objekt klassifiziert wird.

**Revendications**

1. Procédé mis en œuvre par processeur (900) pour détecter des objets dans un emballage scellé sur la base d'une technique de retard, de multiplication et de sommation basée sur une antenne virtuelle, VA-DMAS, comprenant :

la réception (902), via un ou plusieurs processeurs matériels, d'une pluralité de paramètres associés à un convoyeur ;
l'obtention (904), via les un ou plusieurs processeurs matériels, d'un temps de balayage d'un radar sur la base de la pluralité de paramètres, dans lequel le temps de balayage est divisé en parties égales pour chaque paire d'antennes (Tx-Rx) parmi une pluralité de paires d'antennes, dans lequel la pluralité de paires d'antennes sont conçues pour une largeur de faisceau étroite et un gain élevé, dans lequel un intervalle de temps entre chaque balayage est déterminé sur la base du temps de balayage du radar ;
la détermination (906), via les un ou plusieurs processeurs matériels, d'une séquence de balayage entre la pluralité de paires d'antennes sur la base d'une position correspondante de la pluralité de paires d'antennes ;
la détermination heuristique (908), via les un ou plusieurs processeurs matériels, d'une valeur de seuil de couleur d'une position prédéterminée dans une fenêtre d'observation de caméra sur le convoyeur, dans lequel le balayage est déclenché si la valeur de seuil de couleur est dépassée lorsqu'une extrémité avant d'un objet sous test emballé à l'intérieur d'un emballage scellé traverse la position prédéterminée sur le convoyeur, et dans lequel la valeur de seuil de couleur correspond à une pluralité de valeurs RVB ;
lorsque le balayage est déclenché, le balayage (910), via le radar connecté à la pluralité de paires d'antennes, de l'emballage scellé dans la séquence prédéterminée pour obtenir une pluralité d'ensembles de données de portée-temps associés à une pluralité d'identifiants, dans lequel la pluralité d'ensembles de données de portée-temps correspond à une pluralité de signaux réfléchis provenant de l'objet sous test ayant un mouvement continu sur le convoyeur, dans lequel la pluralité d'ensembles de données de portée-temps correspond à une matrice bidimensionnelle, dans lequel des rangées sont des balayages à chaque instant, et des colonnes sont des cases de portée ;
le traitement (912), via les un ou plusieurs processeurs matériels, de la pluralité d'ensembles de données de portée-temps par une technique de retard, de multiplication et de sommation pondérée par motif d'antenne virtuelle, APW-DMAS, sur la base d'une pluralité de positions de chaque antenne virtuelle pour déterminer une pluralité d'images de signature d'objet, dans lequel la pluralité d'images de signature d'objet est déterminée par un facteur de motif dérivé sur la base d'un motif de rayonnement à partir de la pluralité de paires d'antennes, et dans lequel le facteur de motif correspond à un facteur de poids synthétique qui incorpore heuristiquement une directivité et un gain de chaque antenne, dans lequel l'antenne est conçue pour fournir une résolution élevée de la pluralité d'images de signature d'objet sur un emballage entrant en raison de la résolution angulaire accrue obtenue à partir de la directivité plus élevée et l'incorporation d'un effet de directivité en introduisant un multiplicateur synthétique à des valeurs de pixel d'image, dans lequel le multiplicateur synthétique affine la pluralité d'images de signature d'objet en supprimant le bruit et en éliminant des artefacts indésirables ; la formation d'une pluralité focalisée de manière synthétique d'images de signature d'objet, en éliminant une ambiguïté due à une forte réflexion à partir d'un réflecteur indésirable, en incorporant un motif de rayonnement normalisé de l'antenne conçue, à partir de plans d'azimut et d'élévation dans une technique APW-DMAS ;
l'extraction (914), via les un ou plusieurs processeurs matériels, d'au moins une caractéristique associée à la pluralité d'images de signature d'objet ; et

l'obtention (916), via les un ou plusieurs processeurs matériels, d'un modèle de classification d'apprentissage machine entraîné sur la base d'au moins une caractéristique associée à la pluralité d'images de signature d'objet, et l'identification automatique d'une classe de chaque objet sous test parmi une pluralité d'objets sous test se déplaçant sur le convoyeur en utilisant le modèle de classification d'apprentissage machine entraîné.

2. Procédé mis en œuvre par processeur (900) selon la revendication 1, dans lequel la pluralité de paramètres correspond à : (i) une vitesse du convoyeur, (ii) une longueur, L, du convoyeur disponible pour une imagerie qui est déterminée à partir d'une position et d'une largeur de faisceau de la pluralité de paires d'antennes, et (iii) un nombre de balayages, M.

3. Procédé mis en œuvre par processeur (900) selon la revendication 1, dans lequel un score de confiance pour un objet de test inconnu est obtenu à partir du modèle de classification entraîné pour reconnaître s'il y a une fausse alarme soulevée lorsque l'objet sous test est classé.

4. Système (100) pour détecter des objets dans un emballage scellé sur la base d'une technique de retard, de multiplication et de sommation basée sur une antenne virtuelle, VA-DMAS, comprenant :

une mémoire (104) stockant des instructions ;

une ou plusieurs interfaces de communication (106) ; et

un ou plusieurs processeurs matériels (102) couplés à la mémoire (104) via les une ou plusieurs interfaces de communication (106), dans lequel les un ou plusieurs processeurs matériels (102) sont configurés par les instructions pour :

recevoir une pluralité de paramètres associés à un convoyeur (208) ;

obtenir un temps de balayage d'un radar (202) sur la base de la pluralité de paramètres, dans lequel le temps de balayage est divisé en parties égales pour chaque paire d'antennes, Tx-Rx, (204A) parmi une pluralité de paires d'antennes (204A-N), dans lequel la pluralité de paires d'antennes sont conçues pour une largeur de faisceau étroite et un gain élevé, dans lequel un intervalle de temps entre chaque balayage est déterminé sur la base du temps de balayage du radar (202) ;

déterminer une séquence de balayage entre la pluralité de paires d'antennes (204AN) sur la base d'une position correspondante de la pluralité de paires d'antennes (204A-N) ;

déterminer heuristiquement une valeur de seuil de couleur d'une position prédéterminée dans une fenêtre d'observation de caméra sur le convoyeur (208), dans lequel le balayage est déclenché si la valeur de seuil de couleur est dépassée lorsqu'une extrémité avant d'un objet (206) sous test emballé à l'intérieur d'un emballage scellé (210A) traverse la position prédéterminée sur le convoyeur (208), et dans lequel la valeur de seuil de couleur correspond à une pluralité de valeurs RVB ;

lorsque le balayage est déclenché, balayer, via le radar (202) connecté à la pluralité de paires d'antennes (204A-N), l'emballage scellé (210A) dans la séquence prédéterminée pour obtenir une pluralité d'ensembles de données de portée-temps associés à une pluralité d'identifiants, dans lequel la pluralité d'ensembles de données de portée-temps correspond à une pluralité de signaux réfléchis provenant de l'objet (206) sous test ayant un mouvement continu sur le convoyeur, dans lequel la pluralité d'ensembles de données de portée-temps correspond à une matrice bidimensionnelle, dans lequel des rangées sont des balayages à chaque instant, et des colonnes sont des cases de portée ;

traiter la pluralité d'ensembles de données de portée-temps par une technique de retard, de multiplication et de sommation pondérée de diagramme d'antenne virtuelle, APW-DMAS, sur la base d'une pluralité de positions de chaque antenne virtuelle pour déterminer une pluralité d'images de signature d'objet, dans lequel la pluralité d'images de signature d'objet est déterminée par un facteur de diagramme dérivé sur la base d'un diagramme de rayonnement à partir de la pluralité de paires d'antennes, et dans lequel le facteur de diagramme correspond à un facteur de poids synthétique qui incorpore heuristiquement une directivité et un gain de chaque antenne, dans lequel l'antenne est conçue pour fournir une résolution élevée de la pluralité d'images de signature d'objet sur un emballage entrant en raison de la résolution angulaire accrue obtenue à partir de la directivité supérieure et incorporant un effet de directivité en introduisant un multiplicateur synthétique à des valeurs de pixel d'image, dans lequel le multiplicateur synthétique affine la pluralité d'images de signature d'objet en supprimant du bruit et en éliminant des artefacts indésirables ;

former une pluralité de manière synthétique focalisée d'images de signature d'objet, en éliminant une ambiguïté due à une forte réflexion à partir d'un réflecteur indésirable, en incorporant un diagramme de rayonnement normalisé de l'antenne conçue, à partir de plans d'azimut et d'élévation dans une technique APW-DMAS ;

extraire au moins une caractéristique associée à la pluralité d'images de signature d'objet ; et
obtenir un modèle de classification d'apprentissage machine entraîné sur la base d'au moins une caractéristique associée à la pluralité d'images de signature d'objet, et identifier automatiquement une classe de chaque objet (206) sous test parmi une pluralité d'objets sous test se déplaçant sur le convoyeur (208) en utilisant le modèle de classification d'apprentissage machine entraîné.

5. Système (100) selon la revendication 4, dans lequel la pluralité de paramètres correspond à : (i) une vitesse du convoyeur (208), (ii) une longueur, L, du convoyeur (208) disponible pour une imagerie qui est déterminée à partir d'une position et d'une largeur de faisceau de la pluralité de paires d'antennes (204A-N), et (iii) un nombre de balayages, M.

6. Système (100) selon la revendication 4, dans lequel un score de confiance pour un objet de test inconnu est obtenu à partir du modèle de classification entraîné pour reconnaître s'il y a une fausse alarme soulevée lorsque l'objet (206) sous test est classé.

7. Un ou plusieurs supports de stockage d'informations lisibles par machine non transitoires pour détecter des objets dans un emballage scellé sur la base d'une technique de retard, de multiplication et de sommation basée sur une antenne virtuelle, VA-DMAS, comprenant une ou plusieurs instructions qui, lorsqu'elles sont exécutées par un ou plusieurs processeurs matériels, amènent :

la réception d'une pluralité de paramètres associés à un convoyeur ;
l'obtention d'un temps de balayage d'un radar sur la base de la pluralité de paramètres, dans lequel le temps de balayage est divisé en parties égales pour chaque paire d'antennes, Tx-Rx, parmi une pluralité de paires d'antennes, dans lequel la pluralité de paires d'antennes sont conçues pour une largeur de faisceau étroite et un gain élevé, dans lequel un intervalle de temps entre chaque balayage est déterminé sur la base du temps de balayage du radar ;
la détermination d'une séquence de balayage entre la pluralité de paires d'antennes sur la base d'une position correspondante de la pluralité de paires d'antennes ;
la détermination heuristique d'une valeur de seuil de couleur d'une position prédéterminée dans une fenêtre d'observation de caméra sur le convoyeur, dans lequel le balayage est déclenché si la valeur de seuil de couleur est dépassée lorsqu'une extrémité avant d'un objet sous test emballé à l'intérieur d'un emballage scellé traverse la position prédéterminée sur le convoyeur, et dans lequel la valeur de seuil de couleur correspond à une pluralité de valeurs RVB ;
lorsque le balayage est déclenché, le balayage, via le radar connecté à la pluralité de paires d'antennes, de l'emballage scellé dans la séquence prédéterminée pour obtenir une pluralité d'ensembles de données de portée-temps associés à une pluralité d'identifiants, dans lequel la pluralité d'ensembles de données de portée-temps correspond à une pluralité de signaux réfléchis provenant de l'objet sous test ayant un mouvement continu sur le convoyeur, dans lequel la pluralité d'ensembles de données de portée-temps correspond à une matrice bidimensionnelle, dans lequel des rangées sont des balayages à chaque instant, et des colonnes sont des cases de portée ;
le traitement de la pluralité d'ensembles de données de portée-temps par une technique de retard, de multiplication et de sommation pondérée de diagramme d'antenne virtuelle, APW-DMAS, sur la base d'une pluralité de positions de chaque antenne virtuelle pour déterminer une pluralité d'images de signature d'objet, dans lequel la pluralité d'images de signature d'objet est déterminée par un facteur de diagramme dérivé sur la base d'un diagramme de rayonnement à partir de la pluralité de paires d'antennes, et dans lequel le facteur de diagramme correspond à un facteur de poids synthétique qui incorpore heuristiquement une directivité et un gain de chaque antenne, dans lequel l'antenne est conçue pour fournir une résolution élevée de la pluralité d'images de signature d'objet sur un emballage entrant en raison de la résolution angulaire accrue obtenue à partir de la directivité supérieure et incorporant un effet de directivité en introduisant un multiplicateur synthétique à des valeurs de pixel d'image, dans lequel le multiplicateur synthétique affine la pluralité d'images de signature d'objet en supprimant du bruit et en éliminant des artefacts indésirables ;
la formation d'une pluralité de manière synthétique focalisée d'images de signature d'objet, en éliminant une ambiguïté due à une forte réflexion à partir d'un réflecteur indésirable, en incorporant un diagramme de rayonnement normalisé de l'antenne conçue, à partir de plans d'azimut et d'élévation dans une technique APW-DMAS ;
l'extraction d'au moins une caractéristique associée à la pluralité d'images de signature d'objet ; et

l'obtention d'un modèle de classification d'apprentissage machine entraîné sur la base d'au moins une caractéristique associée à la pluralité d'images de signature d'objet, et l'identification automatique d'une classe de chaque objet sous test parmi une pluralité d'objets sous test se déplaçant sur le convoyeur en utilisant le modèle de classification d'apprentissage machine entraîné.

8. Un ou plusieurs supports de stockage d'informations lisibles par machine non transitoires selon la revendication 7, dans lequel la pluralité de paramètres correspond à : (i) une vitesse du convoyeur, (ii) une longueur, L, du convoyeur disponible pour une imagerie qui est déterminée à partir d'une position et d'une largeur de faisceau de la pluralité de paires d'antennes, et (iii) un nombre de balayages, M.

9. Un ou plusieurs supports de stockage d'informations lisibles par machine non transitoires selon la revendication 7, dans lequel un score de confiance pour un objet de test inconnu est obtenu à partir du modèle de classification entraîné pour reconnaître s'il y a une fausse alarme soulevée lorsque l'objet sous test est classé.

**FIG. 1**

Direction
of motion

208

Object
under test
206

210A

204A

204B

204B

204A

Switch1

Switch2

Clk1

Tx

Clk2

Rx

RADAR 202

200

**FIG. 2**

**FIG. 3A**

**FIG. 3B**

Reflection from undesired reflector is reduced

Virtual antenna position

Directional radiation pattern

d1

d1

d2

Θ

Image pixel location where target object is located

Y

X

Z

Image plane, where each cell is at pixel location

**FIG. 4**

**FIG. 5A**

FIG. 5B

**FIG. 5C**

FIG. 6

EP 4 439 114 B1

**FIG. 7A**

**FIG. 7B**

**FIG. 8**

receiving, via one or more hardware processors, a plurality of
parameters associated with a conveyor 902

obtaining, via the one or more hardware processors, a scan time
of a radar based on the plurality of parameters 904

determining, via the one or more hardware processors, sequence
of scanning between the plurality of antenna pairs based on
corresponding position of the plurality of antenna pairs 906

heuristically determining, via the one or more hardware
processors, a color threshold value of a predetermined position
in a camera observation window on the conveyor 908

A

**FIG. 9A**

A

scanning, via the radar connected with the plurality of antenna pairs, the sealed package in the predetermined sequence to obtain a plurality of range-time datasets associated with a plurality of identifiers 910

processing, via the one or more hardware processors, the plurality of range-time datasets by a virtual antenna-pattern-weighted delay-multiply-and-sum (APW-DMAS) algorithm based on a plurality of positions of each virtual antenna to determine a plurality of object signature images 912

extracting, via the one or more hardware processors, at least one feature associated with the plurality of object signature images 914

obtaining, via the one or more hardware processors, a trained classification model based on at least one feature associated with the plurality of object signature images 916

FIG. 9B

**FIG. 10A**

FIG. 10B

## Antenna Pair 1

**Without pattern factor**          **With pattern factor**

**FIG. 11A**

## Antenna Pair 2

**Without pattern factor**          **With pattern factor**

**FIG. 11B**

## Antenna Pair 1

### Without pattern factor          With pattern factor

**FIG. 11C**

## Antenna Pair 2

### Without pattern factor          With pattern factor

**FIG. 11D**

## Antenna Pair 1

**Without pattern factor**     **With pattern factor**

**FIG. 11E**

## Antenna Pair 2

**Without pattern factor**     **With pattern factor**

**FIG. 11F**

**FIG. 12A**

**FIG. 12B**

**FIG. 12C**

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RANI SMRITI et al.** *A Novel Inverse SAR Microwave Imaging Technique using Ultra Wideband Pulsed Radar*

- **NIALL O' MAHONY et al.** *Deep Learning vs. Traditional Computer Vision*